# EUROPEAN PATENT APPLICATION

(11) **EP 4 454 996 A1**
(43) Date of publication of application: **30.10.2024**
(21) Application number: 22911868.2
(22) Date of filing: 20.12.2022
(51) Int. Cl.: B63J 3/02, B63J 2/12, B63B 25/16, F01K 23/10, F01K 11/02, F01K 9/02, F01N 5/02, F02G 5/02, F01K 25/10

(54) **EXHAUST GAS WASTE HEAT RECOVERY SYSTEM OF SHIP**

(30) Priority: 24.12.2021 KR 20210187201; 24.12.2021 KR 20210187202; 24.12.2021 KR 20210187203; 24.12.2021 KR 20210187204; 24.12.2021 KR 20210187205
(71) Applicant: Hanwha Ocean Co., Ltd., Geoje-si, Gyeongsangnam-do 53302 (KR)
(72) Inventor: JEONG, Seong Kyu, Geoje-si Gyeongsangnam-do 53307 (KR); WOO, Il Guk, Seoul 05256 (KR); KANG, Dong Eok, Busan 46743 (KR); YANG, Dae Won, Geoje-si Gyeongsangnam-do 53296 (KR); KIM, Yu Jin, Busan 48744 (KR); KIM, Young Soo, Geoje-si Gyeongsangnam-do 53248 (KR); AN, Su Kyung, Gwangmyeong-si Gyeonggi-do 14242 (KR)
(74) Representative: Cabinet Beau de Loménie
(86) International application number: PCT/KR2022/020862
(87) International publication number: WO 2023/121235

(57) **Abstract**

Disclosed herein is an exhaust gas waste heat recovery system for ships. The exhaust gas waste heat recovery system includes: a heat-transfer medium circulation line provided to a ship and allowing a working fluid to circulate therealong; a vaporizer provided to the heat-transfer medium circulation line and vaporizing the working fluid through heat exchange with an exhaust gas discharged from an engine of the ship; and an expansion turbine provided to the heat-transfer medium circulation line, receiving the working fluid, and generating shaft power while expanding the received working fluid, wherein the engine is fueled by a low-flashpoint liquefied gas, and the working fluid undergoes phase change from liquid to gas using the exhaust gas from the engine fueled by the low-flashpoint liquefied gas as a heat source while circulating in a closed loop along the heat-transfer medium circulation line.

## Description

### [Technical Field]

The present invention relates to an exhaust gas waste heat recovery system for ships. More particularly, the present invention relates to an exhaust gas waste heat recovery system for ships, which generates shaft power by changing the phase of a working fluid circulating along a closed-loop heat-transfer medium circulation line using exhaust gases discharged from an engine fueled by a low-flashpoint liquefied gas as a heat source.

### [Background Art]

Conventionally, most marine propulsion engines are provided with a fuel supply system that uses heavy fuel oils, which are relatively inexpensive, such as bunker C oil. Upon fuel combustion, such a heavy fuel oil fuel supply system emits a large amount of greenhouse gases, such as carbon dioxide, and exhaust gases containing sulfur oxides, nitrogen oxides, etc. emissions of which are regulated by the International Maritime Organization (IMO).

As global warming intensifies, efforts are being made to reduce greenhouse gas emissions worldwide. After the 1997 Kyoto Protocol, which contains obligations for industrialized countries to reduce greenhouse gas emissions, expired in 2020, the 195 parties to the Paris Climate Change Accord, which was adopted at the 21st United Nations Framework Convention on Climate Change in Paris, France, in December 2015 and entered into force in November 2016, are making various efforts to reduce greenhouse gas emissions. This increased focus on GHG and air pollutant emissions, coupled with strengthening of international environmental regulatory standards, has led to the development of environmentally friendly marine fuels.

Liquefied gases are considered an eco-friendly fuel that emits less air pollutants than heavy fuel oil, marine diesel oil (MDO), and the like because elimination or reduction of air pollutants is possible during a liquefaction process. As a representative liquefied gas, liquefied natural gas (LNG) is a colorless and transparent liquid obtained by liquefying natural gas containing methane as a main component through cooling to about -163°C and is being actively developed and used as a marine fuel since it has a volume of about 1/600 that of natural gas in a gaseous state and is thus easy to store and transport. As another representative liquefied gas, liquefied petroleum gas (LPG) is obtained by liquefying petroleum gas mainly composed of low-boiling point hydrocarbons such as propane and butane and is being actively developed and used as a marine fuel since it is easier to store than LNG, which is liquefied at cryogenic temperatures, and has good properties in terms of reduction of SO_{X}, NO_{X}, CO₂, and PM emissions compared to conventional HFO without being inferior to HFO in terms of specific energy and energy density.

Recently, there has been a lot of research and development into use of ammonia as a marine fuel to achieve complete decarbonization. Ammonia (NH₃) is a substance composed of one nitrogen atom and three hydrogen atoms bonded thereto, is easy to liquefy since it can form strong hydrogen bonds between molecules, and has a boiling point of -33.34°C and a melting point of -77.73°C under normal pressure. In particular, ammonia is easy to store and transport, is easy to produce in large quantities through the Haber-Bosch method, and is highly economically feasible compared to other carbon-neutral fuels.

### [Disclosure]

### [Technical Problem]

To supply fuel to an engine, a liquefied gas, such as fuel oil and LNG, is heated according to fuel supply requirements of the engine. In ships using HFO, exhaust waste heat generated from an engine is recovered to generate steam used to heat oil to be supplied as fuel to the engine. Ships fueled by LNG also use steam to vaporize LNG to be supplied as fuel. As such, recovering exhaust waste heat and using the recovered waste heat to heat fuel can improve thermal efficiency of ships. However, since fuel oil itself contains sulfur, recovery of exhaust waste heat can cause sulfuric acid dew point corrosion in which SO₂ contained in exhaust gas condenses to sulfuric acid (H₂SO₄) on a metal, causing corrosion of the metal. When a heat exchanger is installed to utilize exhaust waste heat, only waste heat at a temperature of 150°C or higher is recovered since the temperature of a metal surface of the device is likely to drop below the dew point of sulfuric acid, causing significant corrosion of the metal surface.

However, LPG or ammonia, which has a relatively high boiling point among low-flashpoint fuels, requires a very small amount of heat to be heated to a temperature required for the engine and has little risk of icing in a fuel heater. Accordingly, LPG or ammonia can be sufficiently heated with an engine coolant or the like without using exhaust waste heat.

Furthermore, since this fuel does not contain sulfur, low-temperature corrosion is unlikely to occur even when waste heat at a temperature of 150°C or less is recovered.

Based on these points, the present invention proposes a solution that can recover lots of energy available for consumption in a ship from exhaust waste heat generated from an engine fueled by a liquefied gas fuel, especially a low-flashpoint liquefied gas such as LPG and ammonia.

### [Technical Solution]

In accordance with one aspect of the present invention, there is provided an exhaust gas waste heat recovery system for ships, including: a heat-transfer medium circulation line provided to a ship and allowing a working fluid to circulate therealong;
a vaporizer provided to the heat-transfer medium circulation line and vaporizing the working fluid through heat exchange with an exhaust gas discharged from an engine of the ship; and
an expansion turbine provided to the heat-transfer medium circulation line, receiving the working fluid, and generating shaft power while expanding the received working fluid,
wherein the engine is fueled by a low-flashpoint liquefied gas, and
the working fluid undergoes phase change from liquid to gas using the exhaust gas from the engine fueled by the low-flashpoint liquefied gas as a heat source while circulating in a closed loop along the heat-transfer medium circulation line.

Preferably, the heat-transfer medium circulation line is further provided with: a condenser receiving the working fluid expanded and cooled through the expansion turbine and cooling the received working fluid to change a phase thereof from gas to liquid; and a feed pump pressurizing the working fluid condensed in the condenser and delivering the pressurized working fluid to the vaporizer.

Preferably, the exhaust gas waste heat recovery system further includes: a compressor producing compressed air using shaft power generated by the expansion turbine; and an air supply line along which air is supplied to the compressor.

Preferably, the compressed air produced by the compressor is supplied to a consumption source in the ship along the air supply line, wherein the consumption source includes an air lubrication system ejecting air onto an outer bottom surface of a hull of the ship to reduce frictional resistance during movement of the hull.

Preferably, the exhaust gas waste heat recovery system further includes: a supercharger supercharging scavenging air to be supplied to the engine; a scavenging air supply line along which the scavenging air compressed in the supercharger is cooled and supplied to the engine; a branch line branched off of the scavenging air supply line and connected to the air supply line downstream of the compressor; and a branch valve provided to the branch line.

Preferably, when a pressure of the scavenging air compressed in the supercharger is higher than an outlet pressure of the compressor and there is a need to reduce the pressure of the scavenging air, some of the scavenging air compressed in the supercharger is supplied to the consumption source through adjustment of a degree of opening of the branch valve.

Preferably, the working fluid is an organic refrigerant or an aqueous solution of ammonia.

Preferably, the low-flashpoint liquefied gas is selected from a group containing of LPG and ammonia.

In accordance with another aspect of the present invention, there is provided an exhaust gas waste heat recovery system for ships, including: a heat-transfer medium circulation line provided to a ship and allowing a working fluid to circulate therealong;
a vaporizer provided to the heat-transfer medium circulation line and heating the working fluid through heat exchange with an exhaust gas discharged from an engine of the ship;
a gas-liquid separator provided to the heat-transfer medium circulation line, receiving the heated working fluid from the vaporizer, and separating the received working fluid into gaseous and liquid phases;
an expansion turbine receiving the separated gaseous working fluid from the vaporizer and generating shaft power while expanding the received working fluid;
a condenser receiving the expanded and cooled working fluid from the expansion turbine and cooling the received working fluid to change a phase thereof from gas to liquid;
a feed pump provided to the heat-transfer medium circulation line, receiving the condensed working fluid from the condenser, and pressurizing the received working fluid; and
a liquid line along which the liquid working fluid separated in the gas-liquid separator is supplied to the heat-transfer medium circulation line downstream of the expansion turbine,
wherein the engine is fueled by a low-flashpoint liquefied gas.

Preferably, the exhaust gas waste heat recovery system further includes: a recuperator provided to the heat-transfer medium circulation line, receiving the pressurized working fluid from the feed pump, heating the received working fluid, and supplying the heated working fluid to the vaporizer, wherein the working fluid undergoes phase change from liquid to gas using the exhaust gas from the engine as a heat source while circulating in a closed loop along the heat-transfer medium circulation line.

Preferably, in the recuperator, the working fluid pressurized by the feed pump is heated through heat exchange with the working fluid to be supplied to the condenser from a downstream side of a junction between the liquid line and the heat-transfer medium circulation line.

Preferably, the working fluid is a fluid having a lower boiling point than water.

Preferably, in the recuperator, the working fluid pressurized by the feed pump is heated through heat exchange with the liquid working fluid separated in the gas-liquid separator and flowing through the liquid line.

Preferably, the working fluid is an aqueous solution of ammonia.

Preferably, the engine is an engine fueled by a low-flashpoint liquefied gas, wherein the low-flashpoint liquefied gas is selected from a group containing of LPG and ammonia.

Preferably, the exhaust gas waste heat recovery system further includes: a compressor producing compressed air using shaft power generated by the expansion turbine, wherein the compressed air produced by the compressor is supplied to a consumption source in the ship, the consumption source including an air lubrication system ejecting air onto an outer bottom surface of a hull of the ship to reduce frictional resistance during movement of the hull.

In accordance with a further aspect of the present invention, there is provided an exhaust gas waste heat recovery system for ships, including: a heat-transfer medium circulation line provided to a ship and allowing a working fluid to circulate therealong;

a vaporizer provided to the heat-transfer medium circulation line and heating the working fluid through heat exchange with an exhaust gas discharged from an engine of the ship;
a gas-liquid separator provided to the heat-transfer medium circulation line, receiving the heated working fluid from the vaporizer, and separating the received working fluid into gaseous and liquid phases;
an expansion turbine receiving the separated gaseous working fluid from the gas-liquid separator and generating shaft power while expanding the received working fluid;
a condensing heat exchanger receiving the expanded and cooled working fluid from the expansion turbine and cooling the received working fluid to change a phase thereof from gas to liquid;
a feed pump provided to the heat-transfer medium circulation line, receiving the condensed working fluid from the condensing heat exchanger, pressurizing the received working fluid, and delivering the pressurized working fluid to the vaporizer; and
a first coolant supply line along which a coolant for cooling the working fluid is supplied to the condensing heat exchanger,
wherein the engine is fueled by a low-flashpoint liquefied gas, and,
in the condensing heat exchanger, three streams including a stream of the working fluid expanded and cooled in the expansion turbine, a stream of the working fluid pressurized by the feed pump, and a stream of the coolant in the first coolant supply line undergo heat exchange.

Preferably, the exhaust gas waste heat recovery system further includes: a suction pot further cooling the working fluid condensed in the condensing heat exchanger prior to supply to the feed pump; and a second coolant supply line along which a coolant for cooling the working fluid is supplied to the suction pot, wherein the working fluid is further cooled in the suction pot prior to being supplied to the feed pump to prevent cavitation at a suction side of the feed pump.

Preferably, the exhaust gas waste heat recovery system further includes: a liquid line along which the liquid working fluid separated in the gas-liquid separator is supplied to the heat-transfer medium circulation line downstream of the expansion turbine, wherein the liquid working fluid separated in the gas-liquid separator and having been supplied to the heat-transfer medium circulation line downstream of the expansion turbine along the liquid line is supplied to the condensing heat exchanger together with the working fluid having passed through the expansion turbine.

Preferably, the working fluid undergoes phase change from liquid to gas using the exhaust gas from the engine as a heat source while circulating in a closed loop along the heat-transfer medium circulation line, and the working fluid is a fluid having a lower boiling point than water.

Preferably, the exhaust gas waste heat recovery system further includes: a recuperator provided to the heat-transfer medium circulation line, receiving the working fluid pressurized by the feed pump and having undergone heat exchange in the condensing heat exchanger, heating the received working fluid, and supplying the heated working fluid to the vaporizer.

Preferably, in the recuperator, the working fluid pressurized by the feed pump and having passed through the condensing heat exchanger is heated through heat exchange with the liquid working fluid separated in the gas-liquid separator and flowing through the liquid line.

Preferably, the working fluid is an aqueous solution of ammonia.

Preferably, the low-flashpoint liquefied gas is selected from a group containing of LPG and ammonia.

Preferably, the exhaust gas waste heat recovery system further includes: a compressor producing compressed air using shaft power generated by the expansion turbine, wherein the compressed air produced by the compressor is supplied to a consumption source in the ship, wherein the consumption source includes an air lubrication system ejecting air onto an outer bottom surface of a hull of the ship to reduce frictional resistance during movement of the hull.

In accordance with yet another aspect of the present invention, there is provided an exhaust gas waste heat recovery system for ships, including: a heat-transfer medium circulation line provided to a ship and allowing a working fluid to circulate therealong;
a vaporization unit provided to the heat-transfer medium circulation line and subjecting the working fluid to heat exchange with an exhaust gas discharged from an engine of the ship, the engine being fueled by a low-flashpoint liquefied gas;
an exhaust gas supply line along which the exhaust gas to be subjected to heat exchange with the working fluid is supplied to the vaporization unit;
a gas-liquid separator provided to the heat-transfer medium circulation line, receiving the heated working fluid from the vaporization unit, and separating the received working fluid into gaseous and liquid phases;
an expansion turbine receiving the separated gaseous working fluid from the gas-liquid separator and generating shaft power while expanding the received working fluid;
a condensing heat exchanger receiving the expanded and cooled working fluid from the expansion turbine and cooling the received working fluid to change a phase thereof from gas to liquid; and
a feed pump provided to the heat-transfer medium circulation line, receiving the condensed working fluid from the condensing heat exchanger, pressurizing the received working fluid, and delivering the pressurized working fluid to the vaporization unit,
wherein the vaporization unit includes a vaporizer and a superheater arranged sequentially in a direction of flow of the working fluid delivered from the feed pump, and the exhaust gas supply line sequentially passes through the superheater and the vaporizer, and
the working fluid subjected to heat exchange with the exhaust gas in the vaporizer is introduced into the gas-liquid separator to be separated into gaseous and liquid phases, and the gaseous working fluid separated in the gas-liquid separator is further heated through the superheater and is delivered to the expansion turbine.

Preferably, the exhaust gas waste heat recovery system further includes: a coolant supply line along which a coolant for cooling the working fluid is supplied to the condensing heat exchanger, wherein, in the condensing heat exchanger, three streams including a stream of the working fluid expanded and cooled in the expansion turbine, a stream of the working fluid pressurized by the feed pump, and a stream of the coolant in the coolant supply line undergo heat exchange.

Preferably, the exhaust gas waste heat recovery system further includes: a liquid line along which the liquid working fluid separated in the gas-liquid separator is supplied to the heat-transfer medium circulation line downstream of the expansion turbine, wherein the liquid working fluid separated in the gas-liquid separator and having been supplied to the heat-transfer medium circulation line downstream of the expansion turbine along the liquid line is supplied to the condensing heat exchanger together with the working fluid having passed through the expansion turbine.

Preferably, the working fluid undergoes phase change from liquid to gas using the exhaust gas from the engine as a heat source while circulating in a closed loop along the heat-transfer medium circulation line, and the working fluid is a fluid having a lower boiling point than water.

Preferably, the exhaust gas waste heat recovery system further includes: a recuperator provided to the heat-transfer medium circulation line, receiving the working fluid pressurized by the feed pump and having undergone heat exchange in the condensing heat exchanger, heating the received working fluid, and supplying the heated working fluid to the vaporizer.

Preferably, in the recuperator, the working fluid pressurized by the feed pump and having passed through the condensing heat exchanger is heated through heat exchange with the liquid working fluid separated in the gas-liquid separator and flowing through the liquid line.

Preferably, the vaporization unit further includes a heat-recovery heater in which the exhaust gas having sequentially passed through the superheater and the vaporizer along the exhaust gas supply line undergoes heat exchange with the working fluid, wherein the exhaust gas waste heat recovery system further includes: a branch line branched off of the heat-transfer medium circulation line and allowing the working fluid pressurized by the feed pump and having undergone heat exchange in the condensing heat exchanger to be supplied to the heat-transfer medium circulation line downstream of the recuperator through the heat-recovery heater.

Preferably, the working fluid is an aqueous solution of ammonia.

Preferably, the low-flashpoint liquefied gas is selected from a group containing of LPG and ammonia.

Preferably, the exhaust gas waste heat recovery system further includes: a compressor producing compressed air using shaft power generated by the expansion turbine, wherein the compressed air produced by the compressor is supplied to a consumption source in the ship, wherein the consumption source includes an air lubrication system ejecting air onto an outer bottom surface of a hull of the ship to reduce frictional resistance during movement of the hull.

In accordance with yet another aspect of the present invention, there is provided an exhaust gas waste heat recovery system for ships, including: a heat-transfer medium circulation line provided to a ship and allowing a working fluid to circulate therealong;
a vaporization unit provided to the heat-transfer medium circulation line and subjecting the working fluid to heat exchange with an exhaust gas discharged from an engine of the ship, the engine being fueled by a low-flashpoint liquefied gas;
a gas-liquid separator provided to the heat-transfer medium circulation line, receiving the heated working fluid from the vaporization unit, and separating the received working fluid into gaseous and liquid phases;
an expansion turbine receiving the separated gaseous working fluid from the gas-liquid separator and generating shaft power while expanding the received working fluid;
a condenser receiving the expanded and cooled working fluid from the expansion turbine and cooling the received working fluid to change a phase thereof from gas to liquid;
a feed pump provided to the heat-transfer medium circulation line, receiving the condensed working fluid from the condenser, and pressurizing the received working fluid;
a first recuperator receiving some portion of the working fluid pressurized by the feed pump, heating the received working fluid, and supplying the heated working fluid to the vaporization unit; and
a second recuperator disposed in parallel with the first recuperator, receiving the other portion of the working fluid pressurized by the feed pump, heating the received working fluid, and supplying the heated working fluid to the vaporization unit,
wherein, in the first recuperator, the working fluid pressurized by the feed pump undergoes heat exchange with the expanded and cooled working fluid to be supplied from the expansion turbine to the condenser, and,
in the second recuperator, the working fluid pressurized by the feed pump is heated by waste heat supplied from a compression system or cooling system in the ship.

Preferably, the exhaust gas waste heat recovery system further includes: an exhaust gas supply line along which the exhaust gas to be subjected to heat exchange with the working fluid is supplied to the vaporization unit, wherein the vaporization unit includes a vaporizer and a superheater arranged sequentially in a direction of flow of the working fluid delivered from the feed pump; the exhaust gas supply line sequentially passes through the superheater and the vaporizer; the working fluid subjected to heat exchange with the exhaust gas in the vaporizer is introduced into the gas-liquid separator to be separated into gaseous and liquid phases; and the gaseous working fluid separated in the gas-liquid separator is further heated through the superheater and is delivered to the expansion turbine.

Preferably, the exhaust gas waste heat recovery system further includes: a coolant supply line along which a coolant for cooling the working fluid is supplied to the condenser; and a liquid line along which the liquid working fluid separated in the gas-liquid separator is supplied to the heat-transfer medium circulation line downstream of the expansion turbine, wherein the liquid working fluid separated in the gas-liquid separator and having been supplied to the heat-transfer medium circulation line downstream of the expansion turbine along the liquid line is supplied to the condenser through the first recuperator together with the working fluid having passed through the expansion turbine.

Preferably, the exhaust gas waste heat recovery system further includes: a compressor producing compressed air using shaft power generated by the expansion turbine; and an air supply line along which air is supplied to the compressor, wherein the compressed air produced by the compressor is supplied to the second recuperator along the air supply line to be subjected to heat exchange with the working fluid and is supplied to a consumption source in the ship along the air supply line.

Preferably, the exhaust gas waste heat recovery system further includes: a third recuperator provided to the heat-transfer medium circulation line, receiving the working fluid pressurized by the feed pump and having passed through the first recuperator or the second recuperator, heating the received working fluid, and supplying the heated working fluid to the vaporizer.

Preferably, in the third recuperator, the working fluid pressurized by the feed pump and having passed through the first recuperator or the second recuperator is heated through heat exchange with the liquid working fluid separated in the gas-liquid separator and flowing through the liquid line.

Preferably, the vaporization unit further includes a heat-recovery heater in which the exhaust gas having sequentially passed through the superheater and the vaporizer along the exhaust gas supply line is subjected to heat exchange with the working fluid, wherein the exhaust gas waste heat recovery system further includes: a branch line branched off of the heat-transfer medium circulation line and allowing the working fluid pressurized by the feed pump and having been subjected to heat exchange in the first recuperator to be supplied to the heat-transfer medium circulation line downstream of the third recuperator through the heat-recovery heater.

Preferably, the exhaust gas waste heat recovery system further includes: a compressor producing compressed air using shaft power generated by the expansion turbine; and an air supply line along which air is supplied to the compressor, wherein the compressed air produced by the compressor is supplied to the second recuperator along the air supply line to be subjected to heat exchange with the working fluid and is supplied to a consumption source in the ship along the air supply line.

Preferably, the working fluid is an aqueous solution of ammonia.

Preferably, the low-flashpoint liquefied gas is selected from a group containing of LPG and ammonia.

### [Advantageous Effects]

The exhaust gas waste heat recovery system according to the present invention can improve energy efficiency of a ship by ensuring effective recovery of exhaust waste heat generated from an engine fueled by a low-flashpoint liquefied gas.

In addition, the exhaust gas waste heat recovery system according to the present invention can produce compressed air through conversion of exhaust waste heat into power, can supply the compressed air to a consumption source in the ship, including an air lubrication system, and can improve fuel efficiency by reducing frictional resistance during operation of the ship through the air lubrication system.

In addition, with a heat-transfer medium circulation line employing an organic Rankine cycle suitable for low-temperature waste heat recovery and provided with three heat exchangers, a heat-transfer medium circulation line provided with a condensing heat exchanger in which three fluid flows undergo heat exchange, or a heat-transfer medium circulation line provided with multiple recuperators to increase thermal efficiency of the system, the exhaust gas waste heat recovery system according to the present invention can ensure effective utilization of exhaust waste heat and improvement in energy efficiency of the ship by recovering exhaust waste heat generated from an engine fueled by a low-flashpoint fuel, converting the recovered waste heat into power, and producing electricity or compressed air available for consumption in the ship.

In addition, according to the present invention, a suction pot is disposed upstream of a feed pump to further cool a working fluid condensed in the condensing heat exchanger, thereby preventing cavitation at a suction side of the feed pump, which can occur when vapor enters the feed pump, while enhancing system stability.

In addition, according to the present invention, a vaporization unit is divided into a superheater and a vaporizer according to the temperature of exhaust gas such that a gaseous working fluid vaporized in the vaporizer and having been subjected to phase separation is further heated to a superheated state with high-temperature exhaust gas in the superheater prior to being supplied to an expansion turbine, thereby preventing generation of liquid droplets while enhancing waste heat recovery efficiency and system stability.

### [Description of Drawings]

FIG. 1 is a schematic diagram of an exhaust gas waste heat recovery system for ships according to a first embodiment of the present invention.
FIG. 2 is a schematic diagram of an exhaust gas waste heat recovery system for ships according to a second embodiment of the present invention.
FIG. 3 is a schematic diagram of an exhaust gas waste heat recovery system for ships according to a third embodiment of the present invention.
FIG. 4 is a schematic diagram of an exhaust gas waste heat recovery system for ships according to a fourth embodiment of the present invention.
FIG. 5 is a schematic diagram of an exhaust gas waste heat recovery system for ships according to a fifth embodiment of the present invention.
FIG. 6 is a schematic diagram of an exhaust gas waste heat recovery system for ships according to a sixth embodiment of the present invention.
FIG. 7 is a schematic diagram of an exhaust gas waste heat recovery system for ships according to a seventh embodiment of the present invention.
FIG. 8 is a schematic diagram of an exhaust gas waste heat recovery system for ships according to an eighth embodiment of the present invention.
FIG. 9 is a schematic diagram of an exhaust gas waste heat recovery system for ships according to a ninth embodiment of the present invention.
FIG. 10 is a schematic diagram of an exhaust gas waste heat recovery system for ships according to a tenth embodiment of the present invention.
FIG. 11 is a schematic diagram of an exhaust gas waste heat recovery system for ships according to an eleventh embodiment of the present invention.
FIG. 12 is a schematic diagram of an exhaust gas waste heat recovery system for ships according to a twelfth embodiment of the present invention.

### [Best Mode]

In order to fully appreciate the operational advantages of the present invention and the objectives achieved by practicing the present invention, reference should be made to the accompanying drawings, which illustrate preferred embodiments of the present invention, and description thereof.

Hereinafter, exemplary embodiments of the present invention will be described in detail in terms of the features and effects thereof with reference to the accompanying drawings. It should be noted that like components will be denoted by like reference numerals throughout the specification and the accompanying drawings.

In the embodiments of the present invention described herein, the term "ship" may refer to any type of ship that can use a liquefied gas as fuel for a propulsion engine or for a power generation engine. For example, the ship may include self-propelled vessels, such as an LPG carrier, an LNG carrier, a liquid hydrogen carrier, and an LNG regasification vessel (RV), as well as non-self-propelled floating offshore structures, such as an LNG floating production storage and offloading (FPSO) unit and an LNG floating storage regasification unit (FSRU).

Furthermore, the embodiments may be applied to any type of liquefied gas that can be transported in a liquid state by liquefaction at cryogenic temperatures and can be supplied as engine fuel. For example, such liquefied gases may include liquefied petrochemical gases, such as liquefied natural gas (LNG), liquefied ethane gas (LEG), liquefied petroleum gas (LPG), liquefied ethylene gas (LEG), and liquefied propylene gas (LPG), and ammonia. In the following embodiments, the present invention will be described using an example in which, a low-flash point liquefied gas among liquefied gases, especially, ammonia or LPG, which has a relatively high boiling point among the low-flash point liquefied gases, is used as engine fuel.

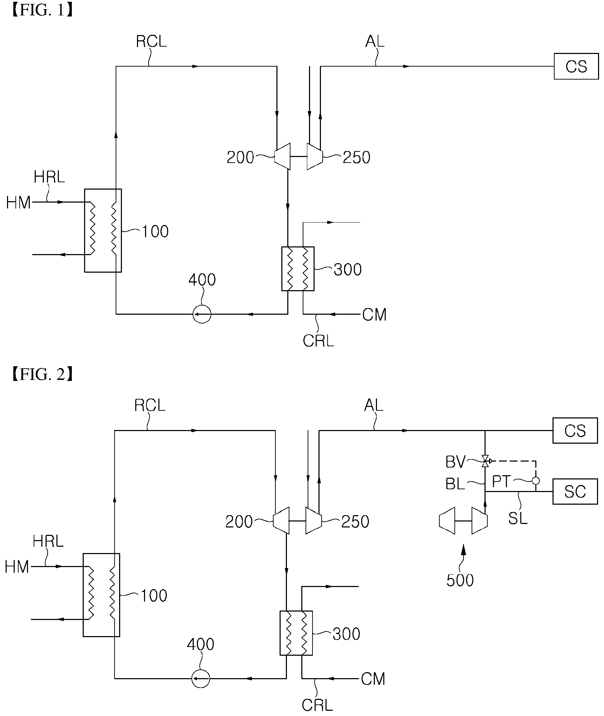

FIG. 1 is a schematic diagram of an exhaust gas waste heat recovery system for ships according to a first embodiment of the present invention, and FIG. 2 is a schematic diagram of an exhaust gas waste heat recovery system for ships according to a second embodiment of the present invention.

Referring to FIG. 1 and FIG. 2, each of the exhaust gas waste heat recovery systems according to these embodiments includes: a heat-transfer medium circulation line RCL provided to a ship and allowing a working fluid to circulate therealong; a vaporizer 100 provided to the heat-transfer medium circulation line and vaporizing the working fluid through heat exchange with an exhaust gas discharged from an engine of the ship; an expansion turbine 200 provided to the heat-transfer medium circulation line, receiving the working fluid, and generating shaft power while expanding the received working fluid.

In these embodiments, the engine (not shown) is fueled by a low-flashpoint liquefied gas and the working fluid undergoes phase change from liquid to gas using the exhaust gas from the engine fueled by the low-flashpoint liquefied gas as a heat source while circulating in a closed loop along the heat-transfer medium circulation line.

Among low-flashpoint liquefied gases, ammonia or LPG has a relatively high boiling point. Specifically, LPG, which is mainly composed of propane, has a flashpoint of -105°C and a boiling point of -42°C under atmospheric pressure and ammonia has a boiling point of -33°C under atmospheric pressure, whereas methane (LNG) has a boiling point of -161°C under atmospheric pressure and hydrogen has a boiling point of -253°C under atmospheric pressure. Accordingly, ammonia or LPG requires a very small amount of heat to be heated to a temperature required for an engine and thus may be heated with an engine coolant or the like without using steam generated from high-temperature exhaust gas from the engine prior to being supplied as a fuel to the engine. In addition, since the fuel does not contain sulfur, low-temperature corrosion is unlikely to occur, thus allowing recovery of waste heat at a temperature of 150°C or less. Accordingly, in these embodiments, exhaust waste heat from the engine is recovered through a heat-transfer medium circulation line employing an organic Rankine cycle (ORC) suitable for low-temperature waste heat recovery.

The heat-transfer medium circulation line RCL is provided with: the vaporizer 100 in which the working fluid is vaporized through heat exchange with an exhaust gas; the expansion turbine 200 receiving the vaporized working fluid and generating shaft power while expanding the received working fluid; a condenser 300 receiving the expanded and cooled working fluid from the expansion turbine and cooling the received working fluid to change the phase thereof from gas to liquid; and a feed pump 400 pressurizing the working fluid condensed in the condenser and delivering the pressurized working fluid to the vaporizer.

The working fluid circulating along the heat-transfer medium circulation line may be, for example, an organic refrigerant or an aqueous solution of ammonia. The working fluid is supplied in a liquid state to the feed pump to be pressurized to a pressure required to drive the expansion turbine, is delivered to the vaporizer to undergo phase change from liquid to gas by absorbing waste heat from an exhaust gas (HM) supplied along an exhaust gas supply line (HRL), and is supplied to the expansion turbine 200. The gaseous working fluid is expanded and partially cooled through the expansion turbine 200 while driving the turbine to generate shaft power and is supplied to the condenser. The working fluid is further cooled and condensed to a liquid state in the condenser 300 by a coolant CM supplied along a coolant supply line CRL and is supplied to the feed pump 400. As such, as the working fluid circulates in a closed loop along the heat-transfer medium circulation line RCL while undergoing phase change, exhaust waste heat is recovered by the working fluid to be converted into power.

Shaft power generated by the expansion turbine 200 using exhaust waste heat may be used to drive a generator to generate electricity. Each of the systems according to these embodiments further includes: a compressor 250 producing compressed air using shaft power generated by the expansion turbine 200; and an air supply line AL along which air is supplied to the compressor 250, such that the compressed air produced by the compressor is supplied to a consumption source CS in the ship along the air supply line. The compressor 250 may be connected to the expansion turbine 200 through a shaft, wherein a compression ratio of the compressor may be determined according to the type of consumption source supplied with the compressed air.

The compressed air consumption source CS in the ship may be, for example, an air lubrication system that ejects air onto an outer bottom surface of a hull of the ship to reduce frictional resistance during movement of the hull. Specifically, the air lubrication system ejects air onto the outer bottom surface of the hull to form a continuous layer of air between the hull and the seawater, thereby reducing frictional resistance of the seawater against the hull during sailing of the ship and thus improving fuel efficiency of the ship.

The air lubrication system may include an air compressor (not shown) producing compressed air to be ejected onto the bottom surface of the hull, a pipe through which the compressed air is delivered, an air ejection unit (not shown), an air layer (not shown) formed on the bottom surface of the hull, a controller (not shown), and the like. The air lubrication system may be supplied with compressed air from the waste heat recovery system. That is, in the systems according to these embodiments, compressed air produced by the compressor 250 using shaft power generated by the expansion turbine may be supplied to the air lubrication system, making it possible to eliminate the need to provide a separate air compressor to the air lubrication system or making it possible to use an air compressor with lower capacity in the air lubrication system by supplementing deficiency in capacity using the compressed air produced by the waste heat recovery system. When used to supply compressed air to the air lubrication system, the compressor may be operated at a compression ratio of about 2. Here, the compressor 250 may be implemented as a single-stage centrifugal compressor.

As such, the systems according to these embodiments can improve fuel efficiency and energy efficiency of the ship by recovering exhaust waste heat generated from an engine fueled by a low-flashpoint fuel, converting the recovered waste heat into power, producing compressed air, and supplying the compressed air to a consumption source in the ship, such as the air lubrication system, to reduce frictional resistance during operation of the ship.

The second embodiment illustrated in FIG. 2 is substantially the same as the first embodiment described above, except that some components are added to allow surplus compressed air from a supercharger to be sent to the waste heat recovery system to be supplied to a consumption source in the ship. The following description will focus on differences from the first embodiment.

Referring to FIG. 2, the system according to this embodiment further includes: a supercharger 500 supercharging scavenging air to be supplied to the engine; a scavenging air supply line SL along which the scavenging air compressed by the supercharger is cooled and supplied to the engine; a branch line BL branched off of the scavenging air supply line and connected to the air supply line downstream of the compressor; and a branch valve BV provided to the branch line.

In order to increase efficiency of the engine in the ship, the engine is supplied with intake air compressed to a high pressure by the supercharger 500, which is referred to as scavenging air. Since the air compressed to a high pressure by the supercharger is at a high temperature, the air is sent to a scavenging air cooler SC to be cooled before the air is supplied to the engine. The pressure of the scavenging air supplied to the engine varies depending on the load of the engine, the temperature of outside air, and the like. When the pressure of the scavenging air is high, some of the scavenging air is required to be vented to regulate the pressure of the scavenging air. In this embodiment, surplus compressed air required to be vented due to high pressure of the scavenging air is sent to a downstream side of the compressor 250 of the waste heat recovery system through the branch line to be supplied to and used by the consumption source CS in the ship, such as the air lubrication system.

That is, when the pressure of the scavenging air compressed by the supercharger is higher than an outlet pressure of the compressor and there is a need to reduce the pressure of the scavenging air before supplying the scavenging air to the engine, the degree of opening of the branch valve BV provided to the branch line BL is adjusted according to the pressure of the scavenging air detected by a pressure transmitter PT on the scavenging air supply line such that some of the scavenging air compressed by the supercharger 500 is sent to the air supply line AL to be supplied to the consumption source CS.

As such, the system according to this embodiment can adjust the pressure of the scavenging air to be supplied to the engine in response to changes in load of the engine while supplying surplus compressed air from the supercharger to the compressed air consumption source in the ship.

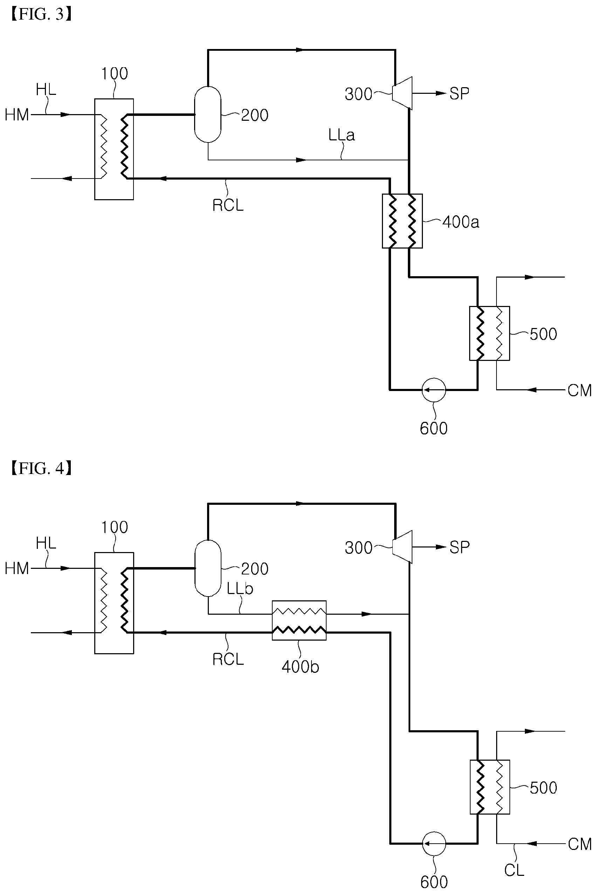

FIG. 3 is a schematic diagram of an exhaust gas waste heat recovery system for ships according to a third embodiment of the present invention, and FIG. 4 is a schematic diagram of an exhaust gas waste heat recovery system for ships according to a fourth embodiment of the present invention.

Referring to FIG. 3 and FIG. 4, each of the exhaust gas waste heat recovery systems according to these embodiments includes: a heat-transfer medium circulation line RCL provided to a ship and allowing a working fluid to circulate therealong; a vaporizer 100 provided to the heat-transfer medium circulation line and vaporizing the working fluid through heat exchange with an exhaust gas discharged from an engine of the ship; a gas-liquid separator 200 receiving the heated working fluid from the vaporizer and separating the received working fluid into gaseous and liquid phases; and an expansion turbine 300 provided to the heat-transfer medium circulation line, receiving the working fluid, and generating shaft power while expanding the received working fluid.

In these embodiments, the engine (not shown) is fueled by a low-flashpoint liquefied gas and the working fluid undergoes phase change from liquid to gas using the exhaust gas from the engine fueled by the low-flashpoint liquefied gas as a heat source while circulating in a closed loop along the heat-transfer medium circulation line.

Among low-flashpoint liquefied gases, ammonia or LPG has a relatively high boiling point. Specifically, LPG, which is mainly composed of propane, has a flashpoint of -105°C and a boiling point of -42°C under atmospheric pressure and ammonia has a boiling point of -33°C under atmospheric pressure, whereas methane (LNG) has a boiling point of -161°C under atmospheric pressure and hydrogen has a boiling point of -253°C under atmospheric pressure. Accordingly, ammonia or LPG requires a very small amount of heat to be heated to a temperature required for an engine and thus may be heated with an engine coolant or the like without using steam generated from high-temperature exhaust gas from the engine prior to being supplied as a fuel to the engine. In addition, since the fuel does not contain sulfur, low-temperature corrosion is unlikely to occur, thus allowing recovery of waste heat at a temperature of 150°C or less. Accordingly, in these embodiments, exhaust waste heat from the engine is recovered through a heat-transfer medium circulation line employing an organic Rankine cycle (ORC) suitable for low-temperature waste heat recovery.

The heat-transfer medium circulation line RCL is provided with: the vaporizer 100 in which the working fluid is vaporized through heat exchange with the exhaust gas; the gas-liquid separator 200 receiving the heated working fluid from the vaporizer and separating the received working fluid into gaseous and liquid phases; the expansion turbine 300 receiving the gaseous working fluid separated in the gas-liquid separator and generating shaft power while expanding the received working fluid; a condenser 500 receiving the expanded and cooled working fluid from the expansion turbine and cooling the received working fluid to change the phase thereof from gas to liquid; a feed pump 600 pressurizing the working fluid condensed in the condenser and delivering the pressurized working fluid; and a recuperator 400a; 400b receiving the pressurized working fluid from the feed pump, heating the received working fluid, and supplying the heated working fluid to the vaporizer. The liquid working fluid separated in the gas-liquid separator is supplied to the heat-transfer medium circulation line downstream of the expansion turbine 300 along a liquid line LLa; LLb to be supplied to the condenser 500 together with the working fluid having passed through the expansion turbine.

In the system according to the third embodiment, the working fluid circulating along the heat-transfer medium circulation line may be a fluid having a lower boiling point than water to be suitable for low temperature waste heat recovery.

Referring to FIG. 3, the working fluid condensed to a liquid phase in the condenser 500 is pressurized by the feed pump 600 to a pressure required to drive the expansion turbine and is delivered to the vaporizer 100 through the recuperator 400a. In the recuperator 400a, the working fluid pressurized by the feed pump is heated through heat exchange with the working fluid to be supplied to the condenser from a downstream side of a junction between the heat-transfer medium circulation line and the liquid line. That is, in the recuperator 400a, the pressurized working fluid downstream of the feed pump 600 undergoes heat exchange with the working fluid upstream of the condenser 500. The working fluid supplied to the vaporizer 100 through the recuperator undergoes phase change by receiving waste heat from the exhaust gas HM supplied along an exhaust gas supply line HRL, and the gaseous working fluid separated in the gas-liquid separator 200 is supplied to the expansion turbine 300. The gaseous working fluid is expanded and partially cooled through the expansion turbine 300 while driving the turbine to generate shaft power, is supplied to the recuperator 400a to undergo heat exchange, and is delivered to the condenser 500. The working fluid is further cooled and condensed into a liquid phase in the condenser 500 by a coolant CM supplied along a coolant supply line CL and is supplied to the feed pump 600. As such, as the working fluid circulates in a closed loop along the heat-transfer medium circulation line RCL while undergoing phase change, exhaust waste heat is recovered by the working fluid to be converted into power.

Shaft power SP generated by the expansion turbine 300 using exhaust waste heat may be used to drive a generator to generate electricity, or may be used by a compressor to produce compressed air to be supplied to a consumption source in the ship.

The compressor (not shown) may be connected to the expansion turbine 300 through a shaft, wherein a compression ratio of the compressor may be determined according to the type of consumption source supplied with the compressed air.

The compressed air consumption source CS in the ship may be, for example, an air lubrication system that ejects air onto an outer bottom surface of a hull of the ship to reduce frictional resistance during movement of the hull. Specifically, the air lubrication system ejects air onto the outer bottom surface of the hull to form a continuous layer of air between the hull and the seawater, thereby reducing frictional resistance of the seawater against the hull during sailing of the ship and thus improving fuel efficiency of the ship.

The air lubrication system may include an air compressor (not shown) producing compressed air to be ejected onto the bottom surface of the hull, a pipe through which the compressed air is delivered, an air ejection unit (not shown), an air layer (not shown) formed on the bottom surface of the hull, a controller (not shown), and the like. The air lubrication system may be supplied with compressed air from the waste heat recovery system. That is, in the systems according to these embodiments, compressed air produced by the compressor using shaft power generated by the expansion turbine may be supplied to the air lubrication system, making it possible to eliminate the need to provide a separate air compressor to the air lubrication system or making it possible to use an air compressor with lower capacity in the air lubrication system by supplementing deficiency in capacity using the compressed air produced by the waste heat recovery system.

As such, the system according to the third embodiment can increase energy efficiency of the ship by recovering exhaust waste heat generated from an engine fueled by a low-flashpoint fuel through the heat-transfer medium circulation line RCL provided with three heat exchangers, that is, the vaporizer, the condenser, and the recuperator, and converting the recovered waste heat into power, and producing electricity or compressed air to be supplied to consumption sources in the ship.

The fourth embodiment illustrated in FIG. 4 differs from the third embodiment described above in terms of the position of the recuperator. The following description will focus on differences from the third embodiment.

The system according to the fourth embodiment is configured such that, in the recuperator 400b, the working fluid pressurized by the feed pump 600 is heated through heat exchange with the liquid working fluid separated in the gas-liquid separator 200 and flowing through the liquid line LLb.

As the recuperator is disposed in this position, the working fluid having passed through the condenser and the feed pump can be preheated prior to being supplied to the vaporizer by absorbing thermal energy from the working fluid that has been heated by exhaust waste heat while passing through the vaporizer but remains in a liquid state without undergoing phase change.

In this embodiment, the working fluid circulating along the heat-transfer medium circulation line RCL may be, for example, an aqueous solution of ammonia. When the aqueous solution of ammonia is heated through heat exchange with a low-temperature exhaust gas in the vaporizer 100, the ammonia, which has a low boiling point, is vaporized and transformed into a gaseous phase, whereas the water may remain in a liquid state without being vaporized. Here, the gaseous ammonia separated in the gas-liquid separator 200 is supplied to the expansion turbine 300, and the water separated in the gas-liquid separator is sent to the recuperator 400b along the liquid line LLb to recover thermal energy therefrom and is then delivered to an upstream side of the condenser 500 to be condensed in the condenser 500 together with the ammonia having passed through the expansion turbine 300.

As such, the system according to this embodiment can improve thermal efficiency of the ship by ensuring effective absorption of exhaust waste heat through the heat-transfer medium circulation line provided with the three heat exchangers and can facilitate replenishment and management of the working fluid by using an aqueous solution of ammonia as the working fluid. In particular, when the system is applied to ammonia fuel-powered ships or ammonia carriers that use ammonia as engine fuel, cargo or fuel can be directly used as the working fluid in the heat-transfer medium circulation line, thereby eliminating the need for a separate refrigerant management system and reducing costs associated with installation of related devices such as a refrigerant tank.

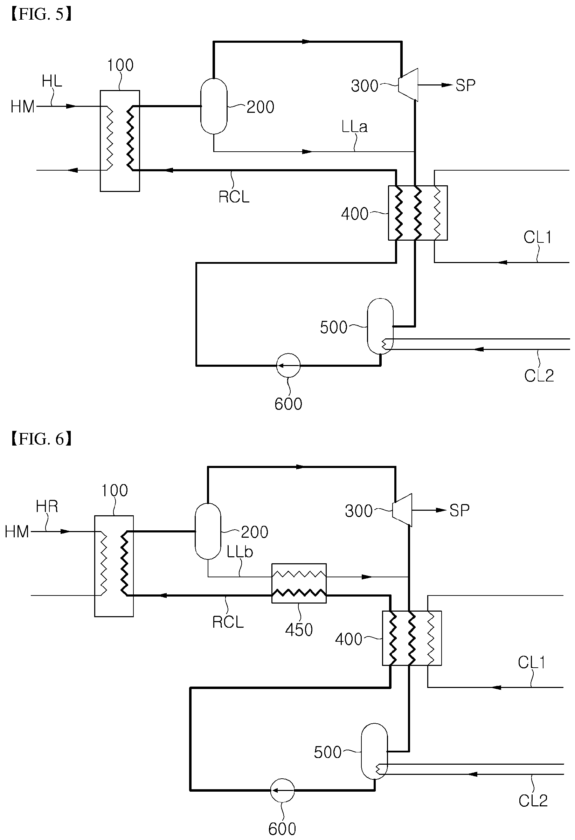

FIG. 5 is a schematic diagram of an exhaust waste heat recovery system for ships according to a fifth embodiment of the present invention, and FIG. 6 is a schematic diagram of an exhaust waste heat recovery system for ships according to a sixth embodiment of the present invention.

Referring to FIG. 5 and FIG. 6, each of the exhaust gas waste heat recovery systems according to these embodiments includes: a heat-transfer medium circulation line RCL provided to a ship and allowing a working fluid to circulate therealong; a vaporizer 100 provided to the heat-transfer medium circulation line and vaporizing the working fluid through heat exchange with an exhaust gas discharged from an engine of the ship; a gas-liquid separator 200 receiving the heated working fluid from the vaporizer and separating the received working fluid into gaseous and liquid phases; and an expansion turbine 300 provided to the heat-transfer medium circulation line, receiving the working fluid, and generating shaft power while expanding the received working fluid.

In these embodiments, the engine (not shown) is fueled by a low-flashpoint liquefied gas and the working fluid undergoes phase change from liquid to gas using the exhaust gas from the engine fueled by the low-flashpoint liquefied gas as a heat source while circulating in a closed loop along the heat-transfer medium circulation line.

Among low-flashpoint liquefied gases, ammonia or LPG has a relatively high boiling point. Specifically, LPG, which is mainly composed of propane, has a flashpoint of -105°C and a boiling point of -42°C under atmospheric pressure and ammonia has a boiling point of -33°C under atmospheric pressure, whereas methane (LNG) has a boiling point of -161°C under atmospheric pressure and hydrogen has a boiling point of -253°C under atmospheric pressure. Accordingly, ammonia or LPG requires a very small amount of heat to be heated to a temperature required for an engine and thus may be heated with an engine coolant or the like without using steam generated from high-temperature exhaust gas from the engine prior to being supplied as a fuel to the engine. In addition, since the fuel does not contain sulfur, low-temperature corrosion is unlikely to occur, thus allowing recovery of waste heat at a temperature of 150°C or less. Accordingly, in these embodiments, exhaust waste heat from the engine is recovered through a heat-transfer medium circulation line employing an organic Rankine cycle (ORC) suitable for low-temperature waste heat recovery.

The heat-transfer medium circulation line RCL is provided with: the vaporizer 100 in which the working fluid is vaporized through heat exchange with the exhaust gas; the gas-liquid separator 200 receiving the heated working fluid from the vaporizer and separating the received working fluid into gaseous and liquid phases; the expansion turbine 300 receiving the gaseous working fluid separated in the gas-liquid separator and generating shaft power while expanding the received working fluid; a condensing heat exchanger 400 receiving the expanded and cooled working fluid from the expansion turbine and cooling the received working fluid to change the phase thereof from gas to liquid; and a feed pump 600 pressurizing the working fluid condensed in the condensing heat exchanger and delivering the pressurized working fluid to the vaporizer. The liquid working fluid separated in the gas-liquid separator is supplied to the heat-transfer medium circulation line downstream of the expansion turbine 300 along a liquid line LLa; LLb to be supplied to the condensing heat exchanger 400 together with the working fluid having passed through the expansion turbine.

The condensing heat exchanger 400 is configured such that the working fluid expanded and partially cooled through the expansion turbine 300 while driving the turbine to generate shaft power and the working fluid delivered through the liquid line can be cooled and condensed to a liquid phase prior to being supplied to the feed pump 600. In the systems according to these embodiments, the condensing heat exchanger 400 is supplied with a coolant for cooling the working fluid along a first coolant supply line CL1. In addition, the working fluid condensed in the condensing heat exchanger 400 and having been pressurized by the feed pump 600 also passes through the condensing heat exchanger 400 prior to being delivered to the vaporizer 100. Accordingly, in the condensing heat exchanger 400, three fluid streams: a stream of the working fluid in the heat-transfer medium circulation line that has been expanded and cooled in the expansion turbine; a stream of the working fluid in the heat-transfer medium circulation line that has been pressurized by the feed pump and will be supplied to the vaporizer; and a stream of the coolant in the first coolant supply line, undergo heat exchange.

By allowing the three fluid streams to undergo heat exchange, the condensing heat exchanger 400 allows the working fluid expanded and cooled in the expansion turbine to be effectively condensed by absorbing cold heat from the other two streams and allows the working fluid pressurized by the feed pump to be preheated prior to being supplied to the vaporizer. As such, the condensing heat exchanger 400 can simultaneously function as both a condenser to change the phase of the working fluid from gas to liquid and a recuperator to preheat the working fluid pressurized by the feed pump prior to supply to the vaporizer, thereby maximizing thermal efficiency while reducing the number of required devices.

In the system according to the fifth embodiment, the working fluid circulating along the heat-transfer medium circulation RCL may be a fluid having a lower boiling point than water to be suitable for low temperature waste heat recovery.

Referring to FIG. 5, the working fluid condensed to a liquid phase in the condensing heat exchanger 400 is pressurized by the feed pump 600 to a pressure required to drive the expansion turbine and is delivered to the vaporizer 100 through the condensing heat exchanger 400. The working fluid preheated through the condensing heat exchanger and having been supplied to the vaporizer 100 undergoes phase change by receiving waste heat from the exhaust gas (HM) supplied along an exhaust gas supply line (HL), and the gaseous working fluid separated in the gas-liquid separator 200 is supplied to the expansion turbine 300. The gaseous working fluid is expanded and partially cooled through the expansion turbine 300 while driving the turbine to generate shaft power and is delivered to the condensing heat exchanger 400. In the condensing heat exchanger 400, the working fluid is further cooled and condensed to a liquid phase by a stream of the coolant CM supplied along the first coolant supply line CL and a stream of the working fluid to be supplied from the feed pump to the vaporizer. The condensed working fluid is delivered to the feed pump 600 to be pressurized to a pressure required to drive the expansion turbine.

Each of the systems according to these embodiments may further include a suction pot 500 disposed downstream of the condensing heat exchanger 400 and further cooling the working fluid to be delivered to the feed pump such that the working fluid condensed in the condensing heat exchanger is further cooled prior to being supplied to the feed pump. The suction pot 500 is connected to a second coolant supply line CL2 to further cool the working fluid through heat exchange with a coolant supplied along the second coolant supply line CL2. As such, by allowing the working fluid cooled in the condensing heat exchanger to be further cooled in the suction pot 500 prior to being delivered to the feed pump, the systems according to these embodiments can prevent cavitation at a suction side of the feed pump, which can occur when vapor enters the feed pump, while providing increased system stability.

The working fluid cooled and condensed to a liquid phase in the condensing heat exchanger and having been further cooled in the suction pot is pressurized by the feed pump 600, is sent back to the condensing heat exchanger 400 to be preheated, and is supplied to the vaporizer 100. As such, as the working fluid circulates in a closed loop along the heat-transfer medium circulation line RCL while undergoing phase change, exhaust waste heat is recovered by the working fluid to be converted into power.

Shaft power SP generated by the expansion turbine 300 using exhaust waste heat may be used to drive a generator to generate electricity, or may be used by a compressor to produce compressed air to be supplied to a consumption source in the ship.

The compressor (not shown) may be connected to the expansion turbine 300 through a shaft, wherein a compression ratio of the compressor may be determined according to the type of consumption source supplied with the compressed air.

The compressed air consumption source CS in the ship may be, for example, an air lubrication system that ejects air onto an outer bottom surface of a hull of the ship to reduce frictional resistance during movement of the hull. Specifically, the air lubrication system ejects air onto the outer bottom surface of the hull to form a continuous layer of air between the hull and the seawater, thereby reducing frictional resistance of the seawater against the hull during sailing of the ship and thus improving fuel efficiency of the ship.

The air lubrication system may include an air compressor (not shown) producing compressed air to be ejected onto the bottom surface of the hull, a pipe through which the compressed air is delivered, an air ejection unit (not shown), an air layer (not shown) formed on the bottom surface of the hull, a controller (not shown), and the like. The air lubrication system may be supplied with compressed air from the waste heat recovery system. That is, in the systems according to these embodiments, compressed air produced by the compressor using shaft power generated by the expansion turbine may be supplied to the air lubrication system, making it possible to eliminate the need to provide a separate air compressor to the air lubrication system or making it possible to use an air compressor with lower capacity in the air lubrication system by supplementing deficiency in capacity using the compressed air produced by the waste heat recovery system.

As such, the system according to this embodiment can increase energy efficiency of the ship by recovering exhaust waste heat generated from an engine fueled by a low-flashpoint fuel through the heat-transfer medium circulation line RCL provided with the condensing heat exchanger in which the three fluid streams undergo heat exchange, converting the recovered waste heat into power, and producing electricity or compressed air to be supplied to consumption sources in the ship.

The sixth embodiment illustrated in FIG. 6 is substantially the same as the fifth embodiment described above, except that a recuperator 450 is added to recover thermal energy from the liquid working fluid separated in the gas-liquid separator and flowing through the liquid line LLb. The following description will focus on differences from the fifth embodiment.

Referring to FIG. 6, the system according to the sixth embodiment further includes a recuperator 450 provided to the heat-transfer medium circulation line RCL, further heating the working fluid pressurized by the feed pump 500 and having undergone heat exchange in the condensing heat exchanger 400, and supplying the further heated working fluid to the vaporizer 100. In the recuperator 450, the working fluid pressurized and preheated through the feed pump 600 and the condensing heat exchanger 400 is heated through heat exchange with the liquid working fluid separated in the gas-liquid separator 200 and flowing through the liquid line LLb.

As the recuperator 450 is disposed in this position, the working fluid having passed through the feed pump and the condensing heat exchanger can preheated prior to being supplied to the vaporizer by absorbing thermal energy from the working fluid that has been heated by exhaust waste heat while passing through the vaporizer but remains in a liquid state without undergoing phase change.

In this embodiment, the working fluid circulating along the heat-transfer medium circulation line RCL may be, for example, an aqueous solution of ammonia. When the aqueous solution of ammonia is heated through heat exchange with a low-temperature exhaust gas in the vaporizer 100, the ammonia, which has a low boiling point, is vaporized and transformed into a gaseous phase, whereas the water may remain in a liquid state without being vaporized. Here, the gaseous ammonia separated in the gas-liquid separator 200 is supplied to the expansion turbine 300, and the water separated in the gas-liquid separator is sent to the recuperator 450 along the liquid line LLb to recover thermal energy therefrom and is then delivered to an upstream side of the condensing heat exchanger 400 to be condensed in the condensing heat exchanger 400 together with the ammonia having passed through the expansion turbine 300.

As such, the system according to this embodiment can maximize thermal efficiency while simplifying system configuration by providing the condensing heat exchanger 400 in which the three fluid streams undergo heat exchange and can increase thermal efficiency of the ship by ensuing effective absorption of exhaust waste heat. In addition, the system according to this embodiment can facilitate replenishment and management of the working fluid by using an aqueous solution of ammonia as the working fluid. In particular, when the system is applied to ammonia fuel-powered ships or ammonia carriers that use ammonia as engine fuel, cargo or fuel can be directly used as the working fluid in the heat-transfer medium circulation line, thereby eliminating the need for a separate refrigerant management system and reducing costs associated with installation of related devices such as a refrigerant tank.

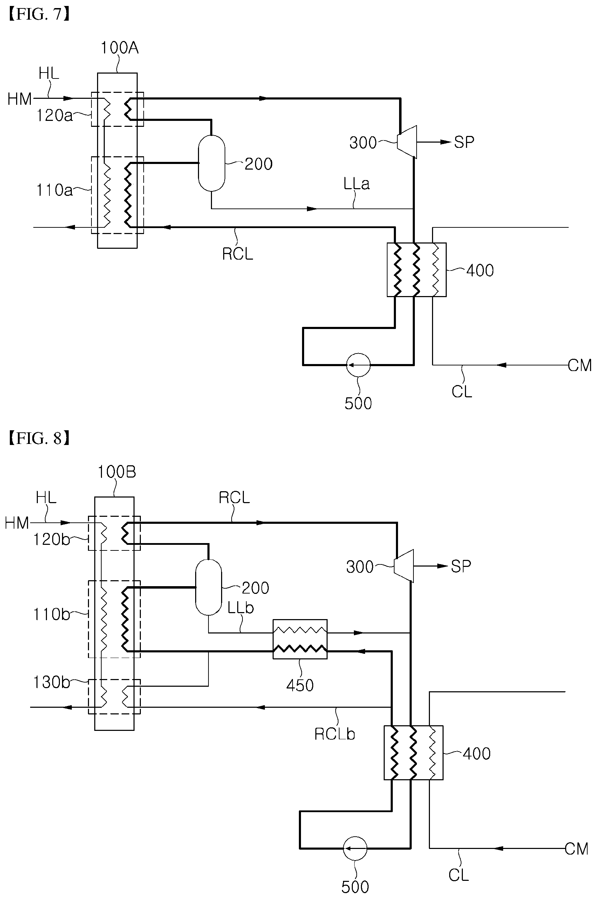

FIG. 7 is a schematic diagram of an exhaust gas waste heat recovery system for ships according to a seventh embodiment of the present invention, and FIG. 8 is a schematic view of an exhaust gas waste heat recovery system for ships according to an eighth embodiment of the present invention.

Referring to FIG. 7 and FIG. 8, each of the exhaust gas waste heat recovery systems according to these embodiments includes: a heat-transfer medium circulation line RCL provided to a ship and allowing a working fluid to circulate therealong; a vaporization unit 100A; 100B provided to the heat-transfer medium circulation line and vaporizing the working fluid through heat exchange with an exhaust gas discharged from an engine of the ship; a gas-liquid separator 200 receiving the heated working fluid heated from the vaporization unit and separating the received working fluid into gaseous and liquid phases; and an expansion turbine 300 provided to the heat-transfer medium circulation line, receiving the working fluid in a gaseous state, and generating shaft power while expanding the received working fluid.

In these embodiments, the engine (not shown) is fueled by a low-flashpoint liquefied gas and the working fluid undergoes phase change from liquid to gas using the exhaust gas from the engine fueled by the low-flashpoint liquefied gas as a heat source while circulating in a closed loop along the heat-transfer medium circulation line.

Among low-flashpoint liquefied gases, ammonia or LPG has a relatively high boiling point. Specifically, LPG, which is mainly composed of propane, has a flashpoint of -105°C and a boiling point of -42°C under atmospheric pressure and ammonia has a boiling point of -33°C under atmospheric pressure, whereas methane (LNG) has a boiling point of -161°C under atmospheric pressure and hydrogen has a boiling point of -253°C under atmospheric pressure. Accordingly, ammonia or LPG requires a very small amount of heat to be heated to a temperature required for an engine and thus may be heated with an engine coolant or the like without using steam generated from high-temperature exhaust gas from the engine prior to being supplied as a fuel to the engine. In addition, since the fuel does not contain sulfur, low-temperature corrosion is unlikely to occur, thus allowing recovery of waste heat at a temperature of 150°C or less. Accordingly, in these embodiments, exhaust waste heat from the engine is recovered through a heat-transfer medium circulation line employing an organic Rankine cycle (ORC) suitable for low-temperature waste heat recovery.

The heat-transfer medium circulation line RCL is provided with: the vaporization unit 100A; 100B in which the working fluid is heated through heat exchange with the exhaust gas; the gas-liquid separator 200 receiving the heated working fluid from the vaporization unit and separating the received working fluid into gaseous and liquid phases; the expansion turbine 300 receiving the gaseous working fluid from the gas-liquid separator and generating shaft power while expanding the received working fluid; a condensing heat exchanger 400 receiving the expanded and cooled working fluid from the expansion turbine and cooling the received working fluid to change the phase thereof from gas to liquid; a feed pump 500 pressurizing the working fluid condensed in the condensing heat exchanger and delivering the pressurized working fluid to the vaporization unit. The liquid working fluid separated in the gas-liquid separator is supplied to the heat-transfer medium circulation line downstream of the expansion turbine 300 along a liquid line LLa; LLb to be supplied to the condensing heat exchanger 400 together with the working fluid having passed through the expansion turbine.

The condensing heat exchanger 400 is configured such that the working fluid expanded and partially cooled through the expansion turbine 300 while driving the turbine to generate shaft power and the working fluid delivered along the liquid line are cooled and condensed to a liquid phase prior to being supplied to the feed pump 500. In the systems according to these embodiments, a coolant for cooling the working fluid is supplied to the condensing heat exchanger 400 along a coolant supply line CL. In addition, the working fluid condensed in the condensing heat exchanger 400 and having been pressurized by the feed pump 500 also passes through the condensing heat exchanger 400 prior to being delivered to the vaporization unit 100A; 100B. Accordingly, in the condensing heat exchanger 400, three fluid streams: a stream of the working fluid in the heat-transfer medium circulation line that has been expanded and cooled by the expansion turbine; a stream of the working fluid in the heat-transfer medium circulation line that has been pressurized by the feed pump and will be supplied to the vaporizer; and a stream of the coolant in the coolant supply line, undergo heat exchange.

By allowing the three fluid streams to undergo heat exchange, the condensing heat exchanger 400 allows the working fluid expanded and cooled in the expansion turbine to be effectively condensed by absorbing cold heat from the other two streams and allows the working fluid pressurized by the feed pump to be preheated prior to being supplied to the vaporization unit. As such, the condensing heat exchanger 400 can simultaneously function as both a condenser to change the phase of the working fluid from gas to liquid and a recuperator to preheat the working fluid pressurized by the feed pump prior to supply to the vaporization unit, thereby maximizing thermal efficiency while reducing the number of required devices.

In these embodiments, the vaporization unit 100A; 100B includes a vaporizer 110a; 110b and a superheater 120a; 120b arranged sequentially in the direction of flow of the working fluid delivered from the feed pump. Since the exhaust gas supplied along the exhaust gas supply line HL sequentially passes through the superheater 120a; 120b and the vaporizer 110a; 110b of the vaporization unit, the exhaust gas is at a relatively high temperature when passing through the superheater, as compared to when passing through the vaporizer.

Accordingly, in the system according to the seventh embodiment, the working fluid pressurized by the feed pump 500 is preheated while passing through the condensing heat exchanger 400, is vaporized in the vaporizer 110a through heat exchange with the exhaust gas at a relatively low temperature, and is introduced into the gas-liquid separator 200 to be separated into gaseous and liquid phases, and the gaseous working fluid separated in the gas-liquid separator 200 is supplied to the superheater 120a of the vaporization unit to be further heated by the exhaust gas at a relatively high temperature and is delivered to the expansion turbine 300, as shown in FIG. 7. As such, the system according to the seventh embodiment can prevent generation of liquid droplets and can improve waste heat recovery efficiency and system stability by further heating the working fluid to a superheated state prior to supply to the expansion turbine using the high-temperature exhaust gas in the superheater.

In the system according to the seventh embodiment, the working fluid circulating along the heat-transfer medium circulation RCL may be a fluid having a lower boiling point than water to be suitable for low temperature waste heat recovery.

Referring to FIG. 7, the working fluid condensed to a liquid phase in the condensing heat exchanger 400 is pressurized by the feed pump 500 to a pressure required to drive the expansion turbine and is delivered to the vaporizer 110a of the vaporization unit through the condensing heat exchanger 400. The working fluid preheated through the condensing heat exchanger and having been supplied to the vaporizer 110a is heated and undergoes phase change by receiving waste heat from the exhaust gas (HM) supplied along the exhaust gas supply line (HL), and the gaseous working fluid separated in the gas-liquid separator 200 is introduced into the superheater of the vaporization unit to be heated to a superheated state by the high-temperature exhaust gas supplied along the exhaust gas supply line (HL) and is supplied to the expansion turbine 300. The gaseous working fluid is expanded and partially cooled through the expansion turbine 300 while driving the turbine to generate shaft power and is delivered to the condensing heat exchanger 400. In the condensing heat exchanger 400, the working fluid is condensed and transformed into a liquid phase by being further cooled by a stream of the coolant CM supplied along the coolant supply line CL and a stream of the working fluid to be supplied from the feed pump to the vaporizer 110a. The condensed working fluid is delivered to the feed pump 500 to be pressurized to a pressure required to drive the expansion turbine.

The working fluid pressurized by the feed pump 500 is preheated while passing through the condensing heat exchanger 400 again and is supplied to the vaporizer 110a. As such, as the working fluid circulates in a closed-loop along the heat-transfer medium circulation line RCL while undergoing phase change, exhaust waste heat is recovered by the working fluid to be converted into power.

Shaft power SP generated by the expansion turbine 300 using exhaust waste heat may be used to drive a generator to generate electricity, or may be used by a compressor to produce compressed air to be supplied to a consumption source in the ship.

The compressor (not shown) may be connected to the expansion turbine 300 through a shaft, wherein a compression ratio of the compressor may be determined according to the type of consumption source supplied with the compressed air.

The compressed air consumption source CS in the ship may be, for example, an air lubrication system that ejects air onto an outer bottom surface of a hull of the ship to reduce frictional resistance during movement of the hull. Specifically, the air lubrication system ejects air onto the outer bottom surface of the hull to form a continuous layer of air between the hull and the seawater, thereby reducing frictional resistance of the seawater against the hull during sailing of the ship and thus improving fuel efficiency of the ship.

The air lubrication system may include an air compressor (not shown) producing compressed air to be ejected onto the bottom surface of the hull, a pipe through which the compressed air is delivered, an air ejection unit (not shown), an air layer (not shown) formed on the bottom surface of the hull, a controller (not shown), and the like. The air lubrication system may be supplied with compressed air from the waste heat recovery system. That is, in the systems according to these embodiments, compressed air produced by the compressor using shaft power generated by the expansion turbine may be supplied to the air lubrication system, making it possible to eliminate the need to provide a separate air compressor to the air lubrication system or making it possible to use an air compressor with lower capacity in the air lubrication system by supplementing deficiency in capacity using the compressed air produced by the waste heat recovery system.

As such, the system according to this embodiment can increase energy efficiency of the ship by recovering exhaust waste heat generated from an engine fueled by a low-flash point fuel through the heat-transfer medium circulation line RCL provided with the condensing heat exchanger in which the three fluid streams undergo heat exchange, converting the recovered waste heat into power, and producing electricity or compressed air supplied to consumption sources in the ship.

The eighth embodiment illustrated in FIG. 8 is substantially the same as the seventh embodiment described above, except that a recuperator 450 and a heat-recovery heater 130b are added, wherein the recuperator 450 serves to recover thermal energy from the liquid working fluid separated in the gas-liquid separator and flowing through the liquid line LLb and the heat-recovery heater 130b serves to recover heat from a low-temperature exhaust gas. The following description will focus on differences from the seventh embodiment.

Referring to FIG. 8, the system according to the eighth embodiment further includes a recuperator 450 provided to the heat-transfer medium circulation line RCL, further heating the working fluid pressurized by the feed pump 500 and having undergone heat exchange in the condensing heat exchanger 400, and delivering the further heated working fluid to the vaporizer 110b. In the recuperator 450, the working fluid pressurized and preheated while passing through the feed pump 500 and the condensing heat exchanger 400 is heated through heat exchange with the liquid working fluid separated in the gas-liquid separator 200 and flowing through the liquid line LLb.

As the recuperator 450 is disposed in this position, the working fluid having passed through the feed pump and the condensing heat exchanger can be preheated prior to being supplied to the vaporizer by absorbing thermal energy from the working fluid that has been heated by exhaust waste heat in the vaporizer 110b but remains in a liquid state without undergoing phase change.

In this embodiment, the working fluid circulating along the heat-transfer medium circulation line RCL may be, for example, an aqueous solution of ammonia. When the aqueous solution of ammonia is heated through heat exchange with the low-temperature exhaust gas in the vaporizer 110b, the ammonia, which has a low boiling point, is vaporized and transformed into a gaseous phase, whereas the water may remain in a liquid state without being vaporized. Here, the gaseous ammonia separated in the gas-liquid separator 200 is heated to a superheated state through the superheater 120b and is supplied to the expansion turbine 300, and the water separated in the gas-liquid separator 200 is sent to the recuperator 450 along the liquid line LLb to recover thermal energy therefrom and is delivered to an upstream side of the condensing heat exchanger 400 to be condensed in the condensing heat exchanger 400 together with the ammonia having passed through the expansion turbine 300.

In this embodiment, the vaporization unit further includes a heat-recovery heater 130b in which a low-temperature exhaust gas having sequentially passed through the superheater 120b and the vaporizer 110b along the exhaust gas supply line undergoes heat exchange with the working fluid. Some portion of the working fluid pressurized by the feed pump 500 and having undergone heat exchange in the condensing heat exchanger 400 may be supplied to the heat-recovery heater 130b along a branch line RCLb to be heated by the low-temperature exhaust gas and is supplied to the heat-transfer medium circulation line RCL downstream of the recuperator 450. Accordingly, the system according to this embodiment can further increase the rate of waste heat recovery by allowing some portion of the working fluid pressurized by the feed pump 500 and having been preheated through the condensing heat exchanger 400 to be heated by a fluid stream in the liquid line LLb passing through the recuperator 450 while allowing the other portion of the working fluid to be heated by a stream of the low-temperature exhaust gas passing through the heat-recovery heater 130b, to be joined with the some portion of the working fluid downstream of the recuperator 450, and to be supplied to the vaporizer 110b of the vaporization unit.

As such, the system according to this embodiment can maximize thermal efficiency while simplifying system configuration by providing the condensing heat exchanger 400 in which the three fluid streams undergo heat exchange and can increase thermal efficiency of the ship by ensuring effective absorption of exhaust waste heat. In addition, the system according to this embodiment can facilitate replenishment and management of the working fluid by using an aqueous solution of ammonia as the working fluid. In particular, when the system is applied to ammonia fuel-powered ships or ammonia carriers that use ammonia as engine fuel, cargo or fuel can be used as the working fluid in the heat-transfer medium circulation line, thereby eliminating the need for a separate refrigerant management system and reducing costs associated with installation of related devices such as a refrigerant tank.

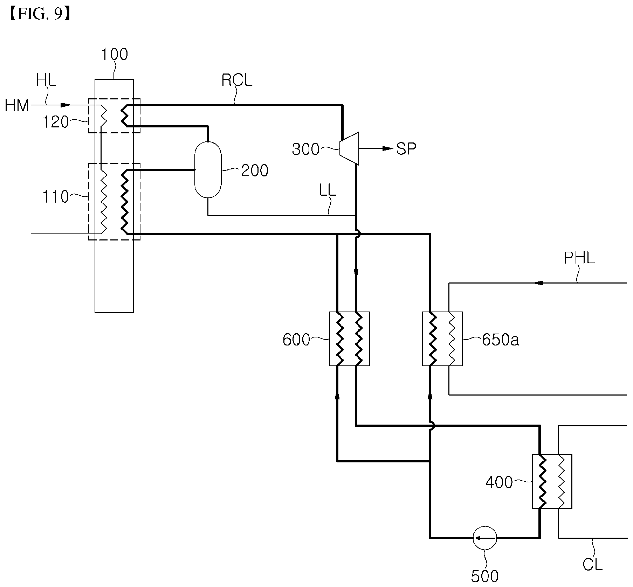

FIG. 9 to FIG. 12 are schematic diagrams of exhaust gas waste heat recovery systems for ships according to ninth to twelfth embodiments of the present invention, respectively.

Referring to FIG. 9 to FIG. 12, each of the exhaust gas waste heat recovery systems according to these embodiments includes: a heat-transfer medium circulation line RCL provided to a ship and allowing a working fluid to circulate therealong; a vaporization unit 100 provided to the heat-transfer medium circulation line and vaporizing the working fluid through heat exchange with an exhaust gas discharged from an engine of the ship; a gas-liquid separator 200 receiving the heated working fluid from the vaporizer and separating the received working fluid into gaseous and liquid phases; and an expansion turbine 300 provided to the heat-transfer medium circulation line, receiving the working fluid, and generating shaft power while expanding the received working fluid.

In these embodiments, the engine (not shown) is fueled by a low-flashpoint liquefied gas and the working fluid undergoes phase change from liquid to gas using the exhaust gas from the engine fueled by the low-flashpoint liquefied gas as a heat source while circulating in a closed loop along the heat-transfer medium circulation line.

Among low-flashpoint liquefied gases, ammonia or LPG has a relatively high boiling point. Specifically, LPG, which is mainly composed of propane, has a flashpoint of -105°C and a boiling point of -42°C under atmospheric pressure and ammonia has a boiling point of -33°C under atmospheric pressure, whereas methane (LNG) has a boiling point of -161°C under atmospheric pressure and hydrogen has a boiling point of -253°C under atmospheric pressure. Accordingly, ammonia or LPG requires a very small amount of heat to be heated to a temperature required for an engine and thus may be heated with an engine coolant or the like without using steam generated from high-temperature exhaust gas from the engine prior to being supplied as a fuel to the engine. In addition, since the fuel does not contain sulfur, low-temperature corrosion is unlikely to occur, thus allowing recovery of waste heat at a temperature of 150°C or less. Accordingly, in these embodiments, exhaust waste heat from the engine is recovered through a heat-transfer medium circulation line employing an organic Rankine cycle (ORC) suitable for low-temperature waste heat recovery.

The heat-transfer medium circulation line RCL is provided with: the vaporization unit 100 in which the working fluid is heated through heat exchange with the exhaust gas; the gas-liquid separator 200 receiving the heated working fluid from the vaporization unit and separating the received working fluid into gaseous and liquid phases; the expansion turbine 300 receiving the gaseous working fluid separated in the gas-liquid separator and generating shaft power while expanding the received working fluid; a condenser 400 receiving the expanded and cooled working fluid from the expansion turbine and cooling the received working fluid to change the phase thereof from gas to liquid; a feed pump 500 pressurizing the working fluid condensed in the condenser and delivering the pressurized working fluid to the vaporization unit; and first and second recuperators 600, 650 receiving the pressurized working fluid from the feed pump, heating the received working fluid, and supplying the heated working fluid to the vaporization unit. The first and second recuperators serve to preheat the working fluid pressurized by the feed pump prior to supply to the vaporization unit. In the first recuperator 600, the working fluid pressurized by the feed pump undergoes heat exchange with the expanded and cooled working fluid to be supplied from the expansion turbine to the condenser and, in the second recuperator 650a; 650b; 650c; 650d, the working fluid pressurized by the feed pump is heated by waste heat supplied from a compression system or cooling system in the ship. The liquid working fluid separated in the gas-liquid separator is supplied to the heat medium circulation line downstream of the expansion turbine 300 along a liquid line LL; LLc; LLd and is supplied to the condenser 400 through the first recuperator together with the working fluid having passed through the expansion turbine.

In these embodiments, the vaporization unit 100 includes a vaporizer 110 and a superheater 120 arranged sequentially in the direction of flow of the working fluid delivered from the feed pump. Since the exhaust gas supplied along an exhaust gas supply line HL sequentially passes through the superheater 120 and the vaporizer 110 of the vaporization unit, the exhaust gas is at a relatively high temperature when passing through the superheater, as compared to when passing through the vaporizer.

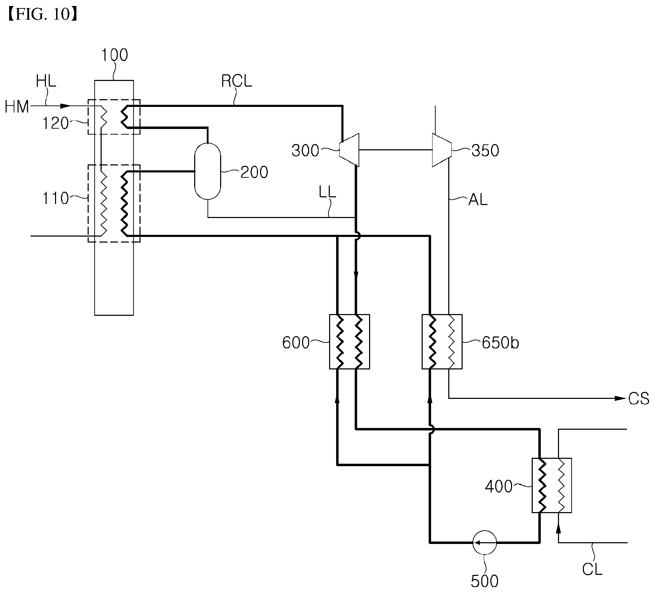

Accordingly, in the ninth and tenth embodiments, the working fluid pressurized by the feed pump 500 is preheated while passing through the first recuperator 600 or the second recuperator 650a; 650b, is vaporized in the vaporizer 110 through heat exchange with the exhaust gas at a relatively low temperature, and is introduced into the gas-liquid separator 200 to be separated into gaseous and liquid phases, and the gaseous working fluid separated in the gas-liquid separator is supplied to the superheater 120 of the vaporization unit to be further heated by the exhaust gas at a relatively high temperature and is delivered to the expansion turbine 300, as shown in FIG. 9 and FIG. 10. As such, the systems according to these embodiments can prevent generation of liquid droplets and can improve waste heat recovery efficiency and system stability by further heating the working fluid to a superheated state prior to supply to the expansion turbine using the high-temperature exhaust gas passing through the superheater.

In the systems according to the ninth and tenth embodiments of FIG. 9 and FIG. 10, the working fluid circulating along the heat-transfer medium circulation RCL may be a fluid having a lower boiling point than water to be suitable for low temperature waste heat recovery.

Referring to FIG. 9 and FIG. 10, the working fluid condensed to a liquid phase in the condenser 400 is pressurized by the feed pump 500 to a pressure required to drive the expansion turbine and is delivered to the vaporizer 110 of the vaporization unit 100 through the first recuperator 600 or the second recuperator 650a; 650b. The working fluid pressurized by the feed pump is divided into two streams delivered to the first recuperator 600 and the second recuperator 650a; 650b, respectively. In the first recuperator 600, the working fluid pressurized by the feed pump is heated through heat exchange with the working fluid to be supplied to the condenser from a downstream side of a junction between the heat-transfer medium circulation line and the liquid line. In the second recuperator 650a; 650b, the working fluid pressurized by the feed pump is heated by receiving waste heat from air or coolant discharged from a compression system or cooling system in the ship. That is, in the first recuperator 600, the pressurized working fluid downstream of the feed pump 500 undergoes heat exchange with the working fluid upstream of the condenser 400 and, in the second recuperator 650a; 650b, waste heat from other systems in the ship is recovered. The working fluid preheated through the first recuperator or the second recuperator is supplied to the vaporizer 110, in which the working fluid is heated and undergoes phase change by receiving waste heat from the exhaust gas HM supplied along the exhaust gas supply line HL and having passed through the superheater. The gaseous working fluid separated in the gas-liquid separator 200 is introduced back into the superheater of the vaporization unit to be heated to a superheated state by the high-temperature exhaust gas supplied along the exhaust gas supply line HL and is supplied to the expansion turbine 300. The gaseous working fluid is expanded and partially cooled through the expansion turbine 300 while driving the turbine to generate shaft power, is supplied to the first recuperator 600 to undergo heat exchange, and is delivered to the condenser 400. The working fluid is further cooled and condensed to a liquid phase in the condenser 400 by a coolant supplied along a coolant supply line CL and is supplied to the feed pump 500. As such, as the working fluid circulates in a closed loop along the heat-transfer medium circulation line RCL while undergoing phase change, exhaust waste heat is recovered by the working fluid to be converted into power.

Shaft power SP generated by the expansion turbine 300 using exhaust waste heat may be used to drive a generator to generate electricity, or may be used by a compressor to produce compressed air to be supplied to a consumption source in the ship.

The system according to the tenth embodiment (see FIG. 10) is further configured with a compressor 350 connected to the expansion turbine 300 through a shaft in the system according to the ninth embodiment.

Referring to FIG. 10, the system according to the tenth embodiment further includes: a compressor 350 producing compressed air using shaft power generated by the expansion turbine 300; and an air supply line AL along which air is supplied to the compressor.

The compressed air produced by the compressor 350 is delivered to the second recuperator 650b along the air supply line AL to undergo heat exchange with the working fluid and is supplied to a consumption source CS in the ship. That is, in the system according to the tenth embodiment and the system according to the twelfth embodiment described below, the compressor 350 connected to the expansion turbine 300 through a shaft is provided to produce compressed air using shaft power and supply the compressed air to the consumption source CS in the ship while allowing heat from the compressed air at an outlet side of the compressor to be recovered in the second recuperator 650b; 650d to be utilized in preheating of the working fluid.

The compressed air consumption source CS in the ship may be, for example, an air lubrication system that ejects air onto an outer bottom surface of a hull of the ship to reduce frictional resistance during movement of the hull. Specifically, the air lubrication system ejects air onto the outer bottom surface of the hull to form a continuous layer of air between the hull and the seawater, thereby reducing frictional resistance of the seawater against the hull during sailing of the ship and thus improving fuel efficiency of the ship.

The air lubrication system may include an air compressor (not shown) producing compressed air to be ejected onto the bottom surface of the hull, a pipe through which the compressed air is delivered, an air ejection unit (not shown), an air layer (not shown) formed on the bottom surface of the hull, a controller (not shown), and the like. The air lubrication system may be supplied with compressed air from the waste heat recovery system. That is, in the systems according to these embodiments, compressed air produced by the compressor using shaft power generated by the expansion turbine may be supplied to the air lubrication system, making it possible to eliminate the need to provide a separate air compressor to the air lubrication system or making it possible to use an air compressor with lower capacity in the air lubrication system by supplementing deficiency in capacity using the compressed air produced by the waste heat recovery system. When used to supply compressed air to the air lubrication system, the compressor may be operated at a compression ratio of about 2. Here, the compressor 350 may be implemented as a single-stage centrifugal compressor.

As such, the systems according to these embodiments can increase energy efficiency of the ship by recovering exhaust waste heat generated from an engine fueled by a low-flashpoint fuel through the heat-transfer medium circulation line RCL provided with the multiple recuperators and through the vaporization unit 100 configured to recover waste heat sequentially according to the temperature of the exhaust gas, converting the recovered waste heat into power, and producing electricity or compressed air to be supplied to consumption sources in the ship.

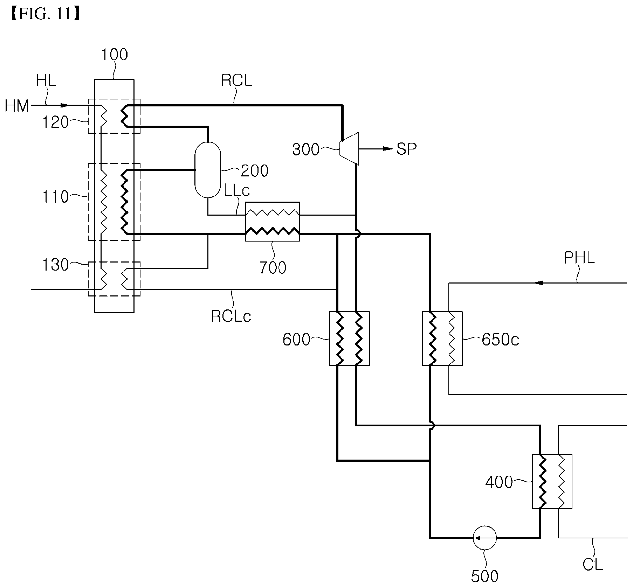

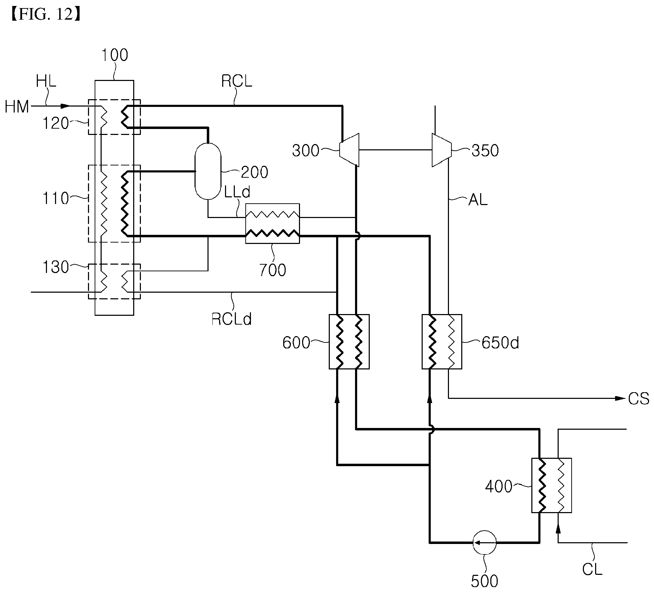

Next, the eleventh and twelfth embodiments illustrated in FIG. 11 and FIG. 12 are further configured with a third recuperator 700 and a heat-recovery heater 130 in systems of the ninth and tenth embodiments described above, wherein the third recuperator 700 serves to recover thermal energy from the liquid working fluid separated in the gas-liquid separator and flowing through the liquid line LLc; LLd and the heat-recovery heater 130 is provided to the vaporization unit 100 to recover heat from a low-temperature exhaust gas. The following description will focus on differences from the ninth and tenth embodiments.

Referring to FIG. 11 and FIG. 12, each of the systems according to these embodiments further includes: a third recuperator 700 provided to the heat-transfer medium circulation line RCL, receiving the working fluid pressurized by the feed pump 500 and having been preheated through heat exchange in the first recuperator 600 or the second recuperator 650c; 650d, heating the received working fluid, and supplying the heated working fluid to the vaporizer 110. In the third recuperator 700, the working fluid pressurized by the feed pump and having passed through the first recuperator and the working fluid pressurized by the feed pump and having passed through the second recuperator are joined with each other and heated through heat exchange with the liquid working fluid separated in the gas-liquid separator 200 and flowing through the liquid line LLc; LLd.

As the third recuperator 700 is disposed in this position, the working fluid having passed through the feed pump and the first recuperator or the second recuperator can be preheated prior to being supplied to the vaporizer by absorbing thermal energy from the working fluid that has been heated by exhaust waste heat while passing through the vaporizer 110 but remains in a liquid state without undergoing phase change.

In these embodiments, the working fluid circulating along the heat-transfer medium circulation line RCL may be, for example, an aqueous solution of ammonia. When the aqueous solution of ammonia is heated in the vaporizer 110 through heat exchange with the low-temperature exhaust gas, the ammonia, which has a low boiling point, is vaporized and transformed into a gaseous phase, whereas the water may remain in a liquid state without being vaporized. Here, the gaseous ammonia separated in the gas-liquid separator 200 is heated to a superheated state through the superheater 120 and is supplied to the expansion turbine 300, and the water separated in the gas-liquid separator 200 is sent to the third recuperator 700 along the liquid line LLc; LLd to recover thermal energy therefrom and is delivered to a downstream side of the expansion turbine 300 to be supplied to the condenser 400 through the first recuperator 600 together with the ammonia having passed through the expansion turbine 300.

In these embodiments, the vaporization unit is further provided with a heat-recovery heater 130 in which the low-temperature exhaust gas having sequentially passed through the superheater 120 and the vaporizer 110 along the exhaust gas supply line undergoes heat exchange with the working fluid. Some portion of the working fluid pressurized by the feed pump 500 and having undergone heat exchange in the first recuperator 600 may be supplied to the heat-recovery heater 130 along a branch line RCLc; RCLd to be heated by the low-temperature exhaust gas and is supplied to the heat-transfer medium circulation line RCL downstream of the third recuperator 700. Accordingly, the systems according to these embodiments can further increase the rate of waste heat recovery by allowing some portion of the working fluid pressurized by the feed pump 500 and having been preheated in the first recuperator 600 to be joined with the working fluid preheated in the second recuperator 650c; 650d and to be heated by a fluid stream in the liquid line LLc; LLd passing through the third recuperator 700 while allowing the other portion of the working fluid to be heated by a stream of the low-temperature exhaust gas passing through the heat-recovery heater 130, to be joined with the some portion of the working fluid downstream of the third recuperator 700, and to be supplied to the vaporizer 110 of the vaporization unit.

The system according to the twelfth embodiment is substantially the same as the system according to the eleventh embodiment described above, except that a compressor 350 is added to produce compressed air using shaft power and supply the compressed air to consumption source CS in the ship and an air supply line AL is disposed at an outlet side of the compressor 350 to allow the compressed air to pass through the second recuperator 650d prior to being supplied to the consumption source CS in the ship such that waste heat from the compressed air can be utilized in preheating of the working fluid. Repeated description will be omitted.

As such, the systems according to these embodiments can ensure effective absorption of exhaust waste heat by increasing thermal efficiency using the third recuperator and the heat-recovery heater. In addition, the systems according to these embodiments can facilitate replenishment and management of the working fluid by using an aqueous solution of ammonia as the working fluid. In particular, for ammonia fuel-powered ships or ammonia carriers that use ammonia as engine fuel, the systems according to these embodiments allows cargo or fuel to be directly used as the working fluid in the heat-transfer medium circulation line, thereby eliminating the need for a separate refrigerant management system and reducing costs associated with installation of related devices such as a refrigerant tank.

Although some embodiments have been described herein, it will be apparent to a person having ordinary knowledge in the art that the present invention is not limited thereto and may be implemented through various modifications or variations without departing from the technical spirit of the present invention.

## Claims

1. An exhaust gas waste heat recovery system for ships, comprising:
a heat-transfer medium circulation line provided to a ship and allowing a working fluid to circulate therealong;
a vaporizer provided to the heat-transfer medium circulation line and vaporizing the working fluid through heat exchange with an exhaust gas discharged from an engine of the ship; and
an expansion turbine provided to the heat-transfer medium circulation line, receiving the working fluid, and generating shaft power while expanding the received working fluid,
wherein the engine is fueled by a low-flashpoint liquefied gas, and
the working fluid undergoes phase change from liquid to gas using the exhaust gas from the engine fueled by the low-flashpoint liquefied gas as a heat source while circulating in a closed loop along the heat-transfer medium circulation line.

2. The exhaust gas waste heat recovery system according to claim 1, wherein the heat-transfer medium circulation line is further provided with:
a condenser receiving the working fluid expanded and cooled through the expansion turbine and cooling the received working fluid to change a phase thereof from gas to liquid; and
a feed pump pressurizing the working fluid condensed in the condenser and delivering the pressurized working fluid to the vaporizer.

3. The exhaust gas waste heat recovery system according to claim 2, further comprising:
a compressor producing compressed air using shaft power generated by the expansion turbine; and
an air supply line along which air is supplied to the compressor.

4. The exhaust gas waste heat recovery system according to claim 3, wherein the compressed air produced by the compressor is supplied to a consumption source in the ship along the air supply line, the consumption source comprising an air lubrication system ejecting air onto an outer bottom surface of a hull of the ship to reduce frictional resistance during movement of the hull.

5. The exhaust gas waste heat recovery system according to claim 4, further comprising:
a supercharger supercharging scavenging air to be supplied to the engine;
a scavenging air supply line along which the scavenging air compressed in the supercharger is cooled and supplied to the engine;
a branch line branched off the scavenging air supply line and connected to the air supply line downstream of the compressor; and
a branch valve provided to the branch line.

6. The exhaust gas waste heat recovery system according to claim 5, wherein, when a pressure of the scavenging air compressed in the supercharger is higher than an outlet pressure of the compressor and there is a need to reduce the pressure of the scavenging air, some of the scavenging air compressed in the supercharger is supplied to the consumption source through adjustment of a degree of opening of the branch valve.

7. An exhaust gas waste heat recovery system for ships, comprising:
a heat-transfer medium circulation line provided to a ship and allowing a working fluid to circulate therealong;
a vaporizer provided to the heat-transfer medium circulation line and heating the working fluid through heat exchange with an exhaust gas discharged from an engine of the ship;
a gas-liquid separator provided to the heat-transfer medium circulation line, receiving the heated working fluid from the vaporizer, and separating the received working fluid into gaseous and liquid phases;
an expansion turbine receiving the separated gaseous working fluid from the vaporizer and generating shaft power while expanding the received working fluid;
a condenser receiving the expanded and cooled working fluid from the expansion turbine and cooling the received working fluid to change a phase thereof from gas to liquid;
a feed pump provided to the heat-transfer medium circulation line, receiving the condensed working fluid from the condenser, and pressurizing the received working fluid; and
a liquid line along which the liquid working fluid separated in the gas-liquid separator is supplied to the heat-transfer medium circulation line downstream of the expansion turbine,
wherein the engine is fueled by a low-flashpoint liquefied gas.

8. The exhaust gas waste heat recovery system according to claim 7, further comprising:
a recuperator provided to the heat-transfer medium circulation line, receiving the pressurized working fluid from the feed pump, heating the received working fluid, and supplying the heated working fluid to the vaporizer,
wherein the working fluid undergoes phase change from liquid to gas using the exhaust gas from the engine as a heat source while circulating in a closed loop along the heat-transfer medium circulation line.

9. The exhaust gas waste heat recovery system according to claim 8, wherein, in the recuperator, the working fluid pressurized by the feed pump is heated through heat exchange with the working fluid to be supplied to the condenser from a downstream side of a junction between the liquid line and the heat-transfer medium circulation line.

10. The exhaust gas waste heat recovery system according to claim 9, wherein the working fluid is a fluid having a lower boiling point than water.

11. The exhaust gas waste heat recovery system according to claim 8, wherein, in the recuperator, the working fluid pressurized by the feed pump is heated through heat exchange with the liquid working fluid separated in the gas-liquid separator and flowing through the liquid line.

12. The exhaust gas waste heat recovery system according to claim 11, further comprising:
a compressor producing compressed air using shaft power generated by the expansion turbine,
wherein the compressed air produced by the compressor is supplied to a consumption source in the ship, the consumption source comprising an air lubrication system ejecting air onto an outer bottom surface of a hull of the ship to reduce frictional resistance during movement of the hull.

13. An exhaust gas waste heat recovery system for ships, comprising:
a heat-transfer medium circulation line provided to a ship and allowing a working fluid to circulate therealong;
a vaporizer provided to the heat-transfer medium circulation line and heating the working fluid through heat exchange with an exhaust gas discharged from an engine of the ship;
a gas-liquid separator provided to the heat-transfer medium circulation line, receiving the heated working fluid from the vaporizer, and separating the received working fluid into gaseous and liquid phases;
an expansion turbine receiving the separated gaseous working fluid from the gas-liquid separator and generating shaft power while expanding the received working fluid;
a condensing heat exchanger receiving the expanded and cooled working fluid from the expansion turbine and cooling the received working fluid to change a phase thereof from gas to liquid;
a feed pump provided to the heat-transfer medium circulation line, receiving the condensed working fluid from the condensing heat exchanger, pressurizing the received working fluid, and delivering the pressurized working fluid to the vaporizer; and
a first coolant supply line along which a coolant for cooling the working fluid is supplied to the condensing heat exchanger,
wherein the engine is fueled by a low-flashpoint liquefied gas, and,
in the condensing heat exchanger, three streams comprising a stream of the working fluid expanded and cooled in the expansion turbine, a stream of the working fluid pressurized by the feed pump, and a stream of the coolant in the first coolant supply line undergo heat exchange.

14. The exhaust gas waste heat recovery system according to claim 13, further comprising:
a suction pot further cooling the working fluid condensed in the condensing heat exchanger prior to supply to the feed pump; and
a second coolant supply line along which a coolant for cooling the working fluid is supplied to the suction pot,
wherein the working fluid is further cooled in the suction pot prior to being supplied to the feed pump to prevent cavitation at a suction side of the feed pump.

15. The exhaust gas waste heat recovery system according to claim 14, further comprising:
a liquid line along which the liquid working fluid separated in the gas-liquid separator is supplied to the heat-transfer medium circulation line downstream of the expansion turbine,
wherein the liquid working fluid separated in the gas-liquid separator and having been supplied to the heat-transfer medium circulation line downstream of the expansion turbine along the liquid line is supplied to the condensing heat exchanger together with the working fluid having passed through the expansion turbine.

16. The exhaust gas waste heat recovery system according to claim 15, wherein the working fluid undergoes phase change from liquid to gas using the exhaust gas from the engine as a heat source while circulating in a closed loop along the heat-transfer medium circulation line, and the working fluid is a fluid having a lower boiling point than water.

17. The exhaust gas waste heat recovery system according to claim 15, further comprising:
a recuperator provided to the heat-transfer medium circulation line, receiving the working fluid pressurized by the feed pump and having undergone heat exchange in the condensing heat exchanger, heating the received working fluid, and supplying the heated working fluid to the vaporizer.

18. The exhaust gas waste heat recovery system according to claim 17, wherein, in the recuperator, the working fluid pressurized by the feed pump and having passed through the condensing heat exchanger is heated through heat exchange with the liquid working fluid separated in the gas-liquid separator and flowing through the liquid line.

19. The exhaust gas waste heat recovery system according to claim 18, further comprising:
a compressor producing compressed air using shaft power generated by the expansion turbine,
wherein the compressed air produced by the compressor is supplied to a consumption source in the ship, the consumption source comprising an air lubrication system ejecting air onto an outer bottom surface of a hull of the ship to reduce frictional resistance during movement of the hull.

20. An exhaust gas waste heat recovery system for ships, comprising:
a heat-transfer medium circulation line provided to a ship and allowing a working fluid to circulate therealong;
a vaporization unit provided to the heat-transfer medium circulation line and subjecting the working fluid to heat exchange with an exhaust gas discharged from an engine of the ship, the engine being fueled by a low-flashpoint liquefied gas;
an exhaust gas supply line along which the exhaust gas to be subjected to heat exchange with the working fluid is supplied to the vaporization unit;
a gas-liquid separator provided to the heat-transfer medium circulation line, receiving the heated working fluid from the vaporization unit, and separating the received working fluid into gaseous and liquid phases;
an expansion turbine receiving the separated gaseous working fluid from the gas-liquid separator and generating shaft power while expanding the received working fluid;
a condensing heat exchanger receiving the expanded and cooled working fluid from the expansion turbine and cooling the received working fluid to change a phase thereof from gas to liquid; and
a feed pump provided to the heat-transfer medium circulation line, receiving the condensed working fluid from the condensing heat exchanger, pressurizing the received working fluid, and delivering the pressurized working fluid to the vaporization unit,
wherein the vaporization unit comprises a vaporizer and a superheater arranged sequentially in a direction of flow of the working fluid delivered from the feed pump, and the exhaust gas supply line sequentially passes through the superheater and the vaporizer, and
the working fluid subjected to heat exchange with the exhaust gas in the vaporizer is introduced into the gas-liquid separator to be separated into gaseous and liquid phases, and the gaseous working fluid separated in the gas-liquid separator is further heated through the superheater and is delivered to the expansion turbine.

21. The exhaust gas waste heat recovery system according to claim 20, further comprising:
a coolant supply line along which a coolant for cooling the working fluid is supplied to the condensing heat exchanger,
wherein, in the condensing heat exchanger, three streams comprising a stream of the working fluid expanded and cooled in the expansion turbine, a stream of the working fluid pressurized by the feed pump, and a stream of the coolant in the coolant supply line undergo heat exchange.

22. The exhaust gas waste heat recovery system according to claim 21, further comprising:
a liquid line along which the liquid working fluid separated in the gas-liquid separator is supplied to the heat-transfer medium circulation line downstream of the expansion turbine,
wherein the liquid working fluid separated in the gas-liquid separator and having been supplied to the heat-transfer medium circulation line downstream of the expansion turbine along the liquid line is supplied to the condensing heat exchanger together with the working fluid having passed through the expansion turbine.

23. The exhaust gas waste heat recovery system according to claim 22, wherein the working fluid undergoes phase change from liquid to gas using the exhaust gas from the engine as a heat source while circulating in a closed loop along the heat-transfer medium circulation line, and the working fluid is a fluid having a lower boiling point than water.

24. The exhaust gas waste heat recovery system according to claim 22, further comprising:
a recuperator provided to the heat-transfer medium circulation line, receiving the working fluid pressurized by the feed pump and having undergone heat exchange in the condensing heat exchanger, heating the received working fluid, and supplying the heated working fluid to the vaporizer.

25. The exhaust gas waste heat recovery system according to claim 24, wherein, in the recuperator, the working fluid pressurized by the feed pump and having passed through the condensing heat exchanger is heated through heat exchange with the liquid working fluid separated in the gas-liquid separator and flowing through the liquid line.

26. The exhaust gas waste heat recovery system according to claim 25, wherein the vaporization unit further comprises a heat-recovery heater in which the exhaust gas having sequentially passed through the superheater and the vaporizer along the exhaust gas supply line undergoes heat exchange with the working fluid,
the exhaust gas waste heat recovery system further comprising:
a branch line branched off the heat-transfer medium circulation line and allowing the working fluid pressurized by the feed pump and having undergone heat exchange in the condensing heat exchanger to be supplied to the heat-transfer medium circulation line downstream of the recuperator through the heat-recovery heater.

27. The exhaust gas waste heat recovery system according to claim 26, further comprising:
a compressor producing compressed air using shaft power generated by the expansion turbine,
wherein the compressed air produced by the compressor is supplied to a consumption source in the ship, the consumption source comprising an air lubrication system ejecting air onto an outer bottom surface of a hull of the ship to reduce frictional resistance during movement of the hull.

28. An exhaust gas waste heat recovery system for ships, comprising:
a heat-transfer medium circulation line provided to a ship and allowing a working fluid to circulate therealong;
a vaporization unit provided to the heat-transfer medium circulation line and subjecting the working fluid to heat exchange with an exhaust gas discharged from an engine of the ship, the engine being fueled by a low-flashpoint liquefied gas;
a gas-liquid separator provided to the heat-transfer medium circulation line, receiving the heated working fluid from the vaporization unit, and separating the received working fluid into gaseous and liquid phases;
an expansion turbine receiving the separated gaseous working fluid from the gas-liquid separator and generating shaft power while expanding the received working fluid;
a condenser receiving the expanded and cooled working fluid from the expansion turbine and cooling the received working fluid to change a phase thereof from gas to liquid;
a feed pump provided to the heat-transfer medium circulation line, receiving the condensed working fluid from the condenser, and pressurizing the received working fluid;
a first recuperator receiving some portion of the working fluid pressurized by the feed pump, heating the received working fluid, and supplying the heated working fluid to the vaporization unit; and
a second recuperator disposed in parallel with the first recuperator, receiving the other portion of the working fluid pressurized by the feed pump, heating the received working fluid, and supplying the heated working fluid to the vaporization unit,
wherein, in the first recuperator, the working fluid pressurized by the feed pump undergoes heat exchange with the expanded and cooled working fluid to be supplied from the expansion turbine to the condenser, and,
in the second recuperator, the working fluid pressurized by the feed pump is heated by waste heat supplied from a compression system or cooling system in the ship.

29. The exhaust gas waste heat recovery system according to claim 28, further comprising:
an exhaust gas supply line along which the exhaust gas to be subjected to heat exchange with the working fluid is supplied to the vaporization unit,
wherein the vaporization unit comprises a vaporizer and a superheater arranged sequentially in a direction of flow of the working fluid delivered from the feed pump, and the exhaust gas supply line sequentially passes through the superheater and the vaporizer, and
the working fluid subjected to heat exchange with the exhaust gas in the vaporizer is introduced into the gas-liquid separator to be separated into gaseous and liquid phases, and the gaseous working fluid separated in the gas-liquid separator is further heated through the superheater and is delivered to the expansion turbine.

30. The exhaust gas waste heat recovery system according to claim 29, further comprising:
a coolant supply line along which a coolant for cooling the working fluid is supplied to the condenser; and
a liquid line along which the liquid working fluid separated in the gas-liquid separator is supplied to the heat-transfer medium circulation line downstream of the expansion turbine,
wherein the liquid working fluid separated in the gas-liquid separator and having been supplied to the heat-transfer medium circulation line downstream of the expansion turbine along the liquid line is supplied to the condenser through the first recuperator together with the working fluid having passed through the expansion turbine.

31. The exhaust gas waste heat recovery system according to claim 30, further comprising:
a compressor producing compressed air using shaft power generated by the expansion turbine; and
an air supply line along which air is supplied to the compressor,
wherein the compressed air produced by the compressor is supplied to the second recuperator along the air supply line to be subjected to heat exchange with the working fluid and is supplied to a consumption source in the ship along the air supply line.

32. The exhaust gas waste heat recovery system according to claim 30, further comprising:
a third recuperator provided to the heat-transfer medium circulation line, receiving the working fluid pressurized by the feed pump and having passed through the first recuperator or the second recuperator, heating the received working fluid, and supplying the heated working fluid to the vaporizer.

33. The exhaust gas waste heat recovery system according to claim 32, wherein, in the third recuperator, the working fluid pressurized by the feed pump and having passed through the first recuperator or the second recuperator is heated through heat exchange with the liquid working fluid separated in the gas-liquid separator and flowing through the liquid line.

34. The exhaust gas waste heat recovery system according to claim 33, wherein the vaporization unit further comprises a heat-recovery heater in which the exhaust gas having sequentially passed through the superheater and the vaporizer along the exhaust gas supply line is subjected to heat exchange with the working fluid,
the exhaust gas waste heat recovery system further comprising: a branch line branched off the heat-transfer medium circulation line and allowing the working fluid pressurized by the feed pump and having been subjected to heat exchange in the first recuperator to be supplied to the heat-transfer medium circulation line downstream of the third recuperator through the heat-recovery heater.

35. The exhaust gas waste heat recovery system according to claim 34, further comprising:
a compressor producing compressed air using shaft power generated by the expansion turbine; and
an air supply line along which air is supplied to the compressor,
wherein the compressed air produced by the compressor is supplied to the second recuperator along the air supply line to be subjected to heat exchange with the working fluid and is supplied to a consumption source in the ship along the air supply line.

36. The exhaust gas waste heat recovery system according to any one of claims 1 to 35, wherein the working fluid is an organic refrigerant or an aqueous solution of ammonia.

37. The exhaust gas waste heat recovery system according to claim 37, wherein the low-flashpoint liquefied gas is selected from a group containing of LPG and ammonia.
